# EUROPEAN PATENT APPLICATION

(11) **EP 4 642 143 A1**
(43) Date of publication of application: **29.10.2025**
(21) Application number: 24747447.1
(22) Date of filing: 24.01.2024
(51) Int. Cl.: H04W 76/10, H04W 88/08, H04L 41/0813, H04W 88/12, H04W 92/12

(54) **ELECTRONIC DEVICE AND METHOD FOR E2 NODE CONFIGURATION UPDATE**

(30) Priority: 26.01.2023 KR 20230010457
(71) Applicant: Samsung Electronics Co., Ltd., Suwon-si, Gyeonggi-do 16677 (KR)
(72) Inventor: SONG, Junhyuk, Suwon-si Gyeonggi-do 16677 (KR); KANG, Seungwon, Suwon-si Gyeonggi-do 16677 (KR); KHO, Youngsung, Suwon-si Gyeonggi-do 16677 (KR); KIM, Chulmin, Suwon-si Gyeonggi-do 16677 (KR); LEE, Chungkeun, Suwon-si Gyeonggi-do 16677 (KR)
(74) Representative: Gulde & Partner
(86) International application number: PCT/KR2024/001149
(87) International publication number: WO 2024/158212

(57) **Abstract**

The present disclosure relates to a 5th generation (5G) or 6th generation (6G) communication system for supporting a higher data transmission rate than a 4th generation (4G) communication system such as long term evolution (LTE). A method performed by an E2 node is provided, an operation of receiving an E2 node configuration query message from a Near-real time (RT) radio access network (RAN) intelligent controller (RIC) may be comprised, an operation of transmitting an E2 node configuration update message to the Near-RT RIC may be comprised, an operation of receiving an E2 node configuration update acknowledge message from the Near-RT RIC may be comprised, and the E2 node configuration query message may comprise an interface type and a component identifier (ID) that correspond to an E2 node component. The E2 node configuration update message may comprise E2 node component information that correspond to the interface type, the component ID, and the E2 node component. The E2 node component information may comprise a request part of E2 node component configuration information and a response part of the E2 node component configuration information.

## Description

### [Technical Field]

The following descriptions relate to an electronic device and a method for an E2 node configuration update.

### [Background Art]

An effort is being achieved to develop an improved 5th generation (5G) communication system or a pre-5G communication system to meet an increasing demand for wireless data traffic after commercialization of a 4th generation (4G) communication system. For this reason, the 5G communication system or the pre-5G communication system is called a communication system beyond 4G Network or a system Post Long Term Evolution (LTE) system.

In order to achieve a high data transmission rate, the 5G communication system is being considered for implementation in an ultra-high frequency (mmWave) band (e.g., such as a 60GHz band). To mitigate path loss of a radio wave and increase a transmission distance of the radio wave in the ultra-high frequency band, beamforming, massive MIMO, Full Dimensional MIMO (FD-MIMO), array antenna, analog beam-forming, and large-scale antenna technologies are being discussed in the 5G communication system.

In addition, in order to improve a network of a system, technologies such as an evolved small cell, an advanced small cell, a cloud radio access network (cloud RAN), an ultra-dense network, device to device communication (D2D), wireless backhaul, a moving network, cooperative communication, Coordinated Multi-Points (CoMP), an interference cancellation, and the like in the 5G communication system.

Additionally, Hybrid Frequency Shift Keying and Quadrature Amplitude Modulation (FQAM) and Sliding Window Superposition Coding (SWSC), which are an Advanced Coding Modulation (ACM) method, Filter Bank Multi Carrier (FBMC), Non Orthogonal Multiple Access (NOMA), and Sparse Code Multiple Access (SCMA), which are an advanced access technology, and the like are being developed in the 5G system.

As the 5G system and a new radio (or a next radio) (NR) are commercialized to meet the demand for the wireless data traffic, a service with a high data transmission rate is being provided to a user through the 5G system such as 4G, and also a wireless communication service having various purposes such as Internet of Things, a service that require high reliability for a specific purpose, and the like is expected to be provided. In a system that is currently mixed with a 4th generation communication system, 5th generation system, and the like, an open radio access network (O-RAN), which was established by operators and equipment providers being gathered together, defines an E2 application protocol standard, an application protocol of an E2 interface between an E2 node and a Near-real-time (RT) radio access network (RAN) intelligent controller (RIC).

Looking back at a development process throughout a generation of wireless communication, a technology has been developed primarily for a human-targeted service such as voice, multimedia, data and the like. Connected devices, which are experiencing an explosive increase after commercialization of the 5th Generation (5G) communication system, are expected to be connected to a communication network. An example of an object connected to the network may include a vehicle, a robot, a drone, a home appliance, a display, a smart sensor installed in various infrastructures, construction machinery, factory equipment, and the like. A mobile device is expected to evolve into various form factors such as augmented reality glasses, a virtual reality headset, a hologram device and the like. An effort is being achieved to develop an improved 6G communication system to provide various services by connecting hundreds of billions of devices and objects in a 6th Generation (6G) era. For this reason, a 6G communication system is called a system beyond 5G communication.

In the 6G communication system, which is expected to be realized around 2030, maximum transmission speed is tera (i.e., 1,000 giga) bits per second (bps) and wireless delay time is 100 microseconds (µsec). That is, transmission speed in the 6G communication system is 50 times faster than the 5G communication system, and the wireless delay time is reduced to one-tenth.

To achieve this high data transmission speed and ultra-low latency, the 6G communication system is being considered for implementation in a terahertz (THz) band (e.g., such as a band from 95 gigahertz (GHz) to 3 terahertz (THz)). The terahertz band is expected to be more important in a technology to ensure signal reachability, wich is coverage, due to more severe path loss and atmospheric absorption compared to a millimeter wave (mmWave) band introduced in 5G. As a key technology to ensure coverage, new waveform beamforming and a multiple antenna transmission technology such as, massive Multiple-Input and Multiple-Output (MIMO), Full Dimensional MIMO (FD-MIMO), an array antenna, and a large scale antenna, and the like, which are superior in terms of coverage than Orthogonal Frequency Division Multiplexing (OFDM), an antenna, and a Radio Frequency element, should be developed. Additionally, new technologies such as metamaterial-based lens and antenna, high-dimensional spatial multiplexing technology using Orbital Angular Momentum (OAM), Reconfigurable Intelligent Surface (RIS), and the like are being discussed to improve coverage of a terahertz band signal.

In addition, in order to enhance frequency efficiency and improve a system network, in the 6G communication system, a full duplex technology in which an uplink and a downlink simultaneously utilize the same frequency resource at the same time, a network technology that comprehensively utilizes a satellite, High-Altitude Platform Stations (HAPS), and the like, a network structure innovation technology that supports a mobile base station and enables network operation optimization and automation, a dynamic spectrum sharing technology through collision avoidance based on spectrum usage prediction, an AI-based communication technology that utilizes Artificial Intelligence (AI) from a design stage and internalizes end-to-end AI support functions to realize system optimization, a next-generation distributed computing technology that realizes services with complexities that exceed a limit of terminal computing capability by utilizing ultra-high-performance communication and computing resources (Mobile Edge Computing (MEC), a cloud, and the like), and the like are being developed. Additionally, an attempt to further strengthen connectivity between devices, further optimize a network, promote softwareization of a network entity, and increase openness of wireless communication is continuing through design of a new protocol to be used in the 6G communication system, implementation of a hardware-based security environment, development of a mechanism for utilization use of data, and development of a technology for maintaining privacy.

Due to this research and development of the 6G communication system, it is expected that the next hyper-connected experience of a new level will be possible through hyper-connectivity of the 6G communication system that includes not only a connection between objects but also a connection between a person and an object. Specifically, it is expected that a service such as truly immersive eXtended Reality (XR), a high-fidelity mobile hologram, a digital replica and the like will be provided through the 6G communication system. In addition, a service such as remote surgery, industrial automation, and emergency response through enhanced security and reliability will be provided through the 6G communication system, so it will be applied in various fields such as industry, medicine, an automobile, and a home appliance.

In the 6G communication system, a function of a RAN is expected to be further subdivided into a type of a service subscriber and a service provider. In a service-based network, a subscription service acknowledgment procedure for a service subscription status will be applied to various functions.

### [Disclosure]

### [Technical Solution]

In embodiments, a method performed by an E2 node is provided. The method may comprise receiving, from a Near-real-time (RT) radio access network (RAN) intelligent controller (RIC), an E2 node configuration query message. The method may comprise transmitting, to the Near-RT RIC, an E2 node configuration update message. The method may comprise receiving, from the Near-RT RIC, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, a method performed by a Near-real-time (RT) radio access network (RAN) intelligent controller (RIC) is provided. The method may comprise transmitting, to an E2 node, an E2 node configuration query message. The method may comprise receiving, from the E2 node, an E2 node configuration update message. The method may comprise transmitting, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, an apparatus of an E2 node is provided. The apparatus may comprise at least one transceiver and at least one processor coupled to the at least one transceiver. The at least one processor may be configured to receive an E2 node configuration query message from a Near-real-time (RT) radio access network (RAN) intelligent controller (RIC). The at least one processor may be configured to transmit an E2 node configuration update message to the Near-RT RIC. The at least one processor may be configured to receive an E2 node configuration update acknowledgment message from the Near-RT RIC. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, an apparatus of a Near- real-time (RT) radio access network (RAN) intelligent controller (RIC) is provide. The apparatus may comprise at least one transceiver and at least one processor coupled to the at least one transceiver. The at least one processor may be configured to transmit, to an E2 node, an E2 node configuration query message. The at least one processor may be configured to receive, from the E2 node, an E2 node configuration update message. The at least one processor may be configured to transmit, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, an apparatus of an E2 node may comprise memory storing instructions, at least one transceiver and at least one processor coupled to the at least one transceiver. The instructions, when executed by the at least one processor, may be configured to cause the apparatus to receive an E2 node configuration query message from a Near- real-time (RT) radio access network (RAN) intelligent controller (RIC), transmit an E2 node configuration update message to the Near-RT RIC, and receive an E2 node configuration update acknowledgment message from the Near-RT RIC. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, an apparatus of a Near- real-time (RT) radio access network (RAN) intelligent controller (RIC) may comprise memory storing instructions, at least one transceiver and at least one processor coupled to the at least one transceiver. The instructions, when executed by the at least one processor, may be configured to cause the apparatus to transmit, to an E2 node, an E2 node configuration query message, receive, from the E2 node, an E2 node configuration update message, and transmit, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, a non-transitory computer-readable storage medium is provided. The non-transitory computer-readable storage medium may store instructions that cause the apparatus to perform operations including receiving, from a Near- real-time (RT) radio access network (RAN) intelligent controller (RIC), an E2 node configuration query message, transmitting, to the Near-RT RIC, an E2 node configuration update message, and receiving, from the Near-RT RIC, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, a non-transitory computer-readable storage medium is provided. The non-transitory computer-readable storage medium may store instructions that cause the apparatus to perform operations including transmitting, to an E2 node, an E2 node configuration query message, receiving, from the E2 node, an E2 node configuration update message, and transmitting, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

### [Description of the Drawings]

FIG. 1 illustrates an example of a 4th generation (4G) Long Term Evolution (LTE) core system.
FIG. 2A illustrates an example of a 5th generation (5G) non-standard alone (NSA) system.
FIG. 2B illustrates an example of an architecture for an O-RAN.
FIG. 3 illustrates a protocol stack of an E2 application protocol message in a wireless access network according to embodiments.
FIG. 4 illustrates an example of a connection between a base station and a radio access network intelligence controller (RIC) in a wireless access network according to embodiments.
FIG. 5 illustrates a configuration of an apparatus in a wireless access network according to embodiments.
FIG. 6 illustrates a logical function related to an E2 message of an E2 node and an RIC in a wireless access network according to embodiments.
FIG. 7 illustrates examples of function separation between an E2 node and an RIC according to embodiments.
FIG. 8 illustrates an implementation example of an E2 node and an RIC according to embodiments.
FIG. 9 illustrates examples of function separation between a centralized unit (CU) and an RIC according to embodiments.
FIG. 10 illustrates examples of an E2 application protocol (E2AP) procedure between an E2 node and a Near-RT RIC.
FIG. 11 illustrates an example of an E2 node configuration query procedure.

### [Mode for Invention]

Terms used in the present disclosure are used only to describe a specific embodiment, and may not be intended to limit a range of another embodiment. A singular expression may include a plural expression unless the context clearly means otherwise. Terms used herein, including a technical or a scientific term, may have the same meaning as those generally understood by a person with ordinary skill in the art described in the present disclosure. Among the terms used in the present disclosure, terms defined in a general dictionary may be interpreted as identical or similar meaning to the contextual meaning of the relevant technology and are not interpreted as ideal or excessively formal meaning unless explicitly defined in the present disclosure. In some cases, even terms defined in the present disclosure may not be interpreted to exclude embodiments of the present disclosure.

In various embodiments of the present disclosure described below, a hardware approach will be described as an example. However, since the various embodiments of the present disclosure include technology that uses both hardware and software, the various embodiments of the present disclosure do not exclude a software-based approach.

A term referring to a configuration (e.g., setup, setting, arrangement, control), a term referring to a signal (e.g., packet, message, signal, information, signaling), a term referring to a resource (e.g., section, symbol, slot, subframe, radio frame, subcarrier, resource element (RE), resource block (RB), bandwidth part (BWP), occasion), a term for a calculation state (e.g., step, operation, procedure), a term referring to data (e.g., packet, message, user stream, information, bit, symbol, codeword), a term referring to a channel, a term referring to network entities (e.g., distributed unit (DU), radio unit (RU), central unit (CU), CU-control plane (CP), CU-user plane (UP), open radio access network (O-RAN)-DU (O-DU), O-RAN RU (O-RU), O-RAN CU (O-CU), O-RAN CU-CP (O-CU-UP), O-RAN CU-CP (O-CU-CP)), a term referring to a component of an apparatus, and the like used in the following description are exemplified for convenience of explanation. Therefore, the present disclosure is not limited to terms to be described below, and another term having an equivalent technical meaning may be used. In addition, a term such as '...unit', '...device', '...object', and '...structure', and the like used below may mean at least one shape structure or may mean a unit processing a function.

In addition, in the present disclosure, the term 'greater than' or 'less than' may be used to determine whether a particular condition is satisfied or fulfilled, but this is only a description to express an example and does not exclude description of 'greater than or equal to' or 'less than or equal to'. A condition described as 'greater than or equal to ' may be replaced with 'greater than', a condition described as 'less than or equal to' may be replaced with 'less than', and a condition described as ' greater than or equal to and less than' may be replaced with 'greater than and less than or equal to'. In addition, hereinafter, 'A' to 'B' refers to at least one of elements from A (including A) to B (including B). Hereinafter, 'C' and/or 'D' means including at least one of 'C' or 'D', that is, {'C', 'D', and 'C' and 'D'}.

In addition, the present disclosure describes various embodiments using terms used in some communication standards (e.g., 3rd Generation Partnership Project (3GPP), extensible radio access network (xRAN), open radio access network (O-RAN)), but this is only an example for explanation. Various embodiments of the present disclosure may be easily modified and applied in another communication system.

As 4th generation (4G)/5th generation (5G) communication systems (e.g., new radio (NR)) are commercialized, differentiated service support for a user in a virtualized network is required. 3GPP is a joint research project between mobile communication-related organizations and aims to generate a third generation mobile communication system standard - which is appliable globally - within a scope of an IMT-2000 project in the International Telecommunications Union (ITU). The 3GPP was established in December 1998, and a 3GPP standard is based on an advanced GSM standard, and includes all of a radio, a core network, and a service architecture in a scope of standardization. Accordingly, an open radio access network (O-RAN) newly defined a radio unit (RU), a digital unit (DU), a central unit (CU)-control plane (CP), a CU-user plane (UP), which are nodes that configure a 3GPP network entity (NE) and a base station, as an O-RAN (O)-RU, an O-DU, an O-CU-CP, an O-CU-UP, respectively, and additionally standardized near-real-time (NRT) radio access network intelligent controller (RIC). The present disclosure is for supporting an operator specific service model in an E2 interface in which an RIC requests a service from an O-DU, an O-CU-CP, or an O-CU-UP. Herein, the O-RU, the O-DU, the O-CU-CP, and the O-CU-UP may be understood as objects that configure a RAN that may operate according to an O-RAN standard, and may be referred to as an E2 node. An interface with objects configuring the RAN that may operate according to the O-RAN standard between the RIC and E2 nodes uses an E2 application protocol (AP).

The RIC is a logical node that may collect information at a cell site transmitted and received by a terminal and the O-DU, the O-CU-CP, or the O-CU-UP. The RIC may be implemented in a form of a server intensively disposed in one physical location. A connection may be achieved through Ethernet between the O-DU and the RIC, between the O-CU-CP and the RIC, and between the O-CU-UP and the RIC. To this end, an interface standard for communication between the O-DU and the RIC, the O-CU-CP and the RIC, the O-CU-UP and the RIC is required, message specification such as an E2-DU, an E2-CU-CP, an E2-CU-UP, and the like, definition of a procedure between the O-DU, the O-CU-CP, and the O-CU-UP, and the RIC. In particular, the differentiated service support is required for the user in the virtualized network, and by concentrating a call processing message/function generated in the O-RAN to the RIC, it is necessary to define a function of a message of the E2-DU, the E2-CU-CP, and theE2-CU-UP to support a service for a wide range of cell coverage.

The RIC performs communication with the O-DU, the O-CU-CP, and the O-CU-UP using the E2 interface, and may set an event occurrence condition by generating and transmitting a subscription message. Specifically, the RIC may generate an E2 subscription request message, and may set a call processing EVENT by transmitting it to an E2 node (e.g., the O-CU-CP, the O-CU-UP, and the O-DU). In addition, after the EVENT is set, the E2 node transmit a Subscription Request Response message transmitted to the RIC. The E2 node may transmit a current state to the RIC through E2 indication/report. The RIC may provide control for the O-DU, the O-CU-CP, and the O-CU-UP using an E2 control message.

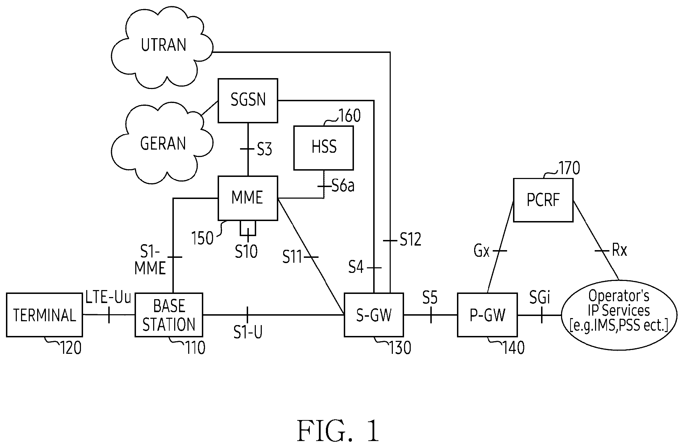

FIG. 1 illustrates an example of a 4^{th} generation (4G) Long Term Evolution (LTE) core system.

Referring to FIG. 1, the LTE core system includes a base station 110, a terminal 120, a serving gateway (S-GW) 130, a packet data network gateway (P-GW) 140, a mobility management entity (MME) 150, a home subscriber server (HSS) 160, and a policy and charging rule function (PCRF) 170.

The base station 110 is a network infrastructure for providing wireless access to the terminal 120. For example, the base station 110 is an apparatus that performs scheduling by collecting state information such as a buffer state, available transmission power, a channel state, and the like of the terminal 120. The base station 110 has coverage defined as a certain geographic area based on a distance at which a signal may be transmitted. The base station 110 is connected to the MME 150 through an S1-MME interface. In addition to a base station, the base station 110 may be referred to as an 'access point (AP)', an 'eNodeB (eNB)', a 'wireless point', a 'transmission/reception point (TRP)', or another term having a technical meaning equivalent thereto.

The terminal 120 is an apparatus used by a user and performs communication with the base station 110 through a wireless channel. In some cases, the terminal 120 may be operated without user involvement. That is, the terminal 120 is an apparatus that performs machine type communication (MTC), and may not be carried by the user. The terminal 120 may be referred to as 'user equipment (UE)', a 'mobile station', a 'subscriber station', 'customer-premises equipment (CPE)', a 'remote terminal', a 'wireless terminal', or a 'user device' or another term having a technical meaning equivalent thereto.

The S-GW 130 provides a data bearer and generates or controls the data bearer according to control of the MME 150. For example, the S-GW 130 processes a packet that has arrived from the base station 110 or a packet to be forwarded to the base station 110. In addition, the S-GW 130 may perform an anchoring role when performing handover between base stations of the terminal 120. The P-GW 140 may function as a connection point with an external network (e.g., an Internet network). In addition, the P-GW 140 allocates an Internet Protocol (IP) address to the terminal 120 and performs as an anchor role for the S-GW 130. In addition, the P-GW 140 may apply a quality of service (QoS) policy of the terminal 120 and manage account data.

The MME 150 manages mobility of the terminal 120. In addition, the MME 150 may perform authentication, bearer management, and the like for the terminal 120. That is, the MME 150 is responsible for mobility management and various control functions for the terminal. The MME 150 may be linked with a serving GPRS support node (SGSN).

The HSS 160 stores key information and a subscriber profile for authentication of the terminal 120. The key information and the subscriber profile are transmitted from the HSS 160 to the MME 150 when the terminal 120 accesses a network.

The PCRF 170 defines a policy and a rule for charging. Stored information may be transmitted from the PCRF 180 to the P-GW 140, and the P-GW 140 may perform control (e.g., QoS management, charging, and the like) for the terminal 120 based on the information provided from the PCRF 180.

A carrier aggregation (hereinafter 'CA') technology is a technology that couples a plurality of component carriers, and that increases frequency usage efficiency from a perspective of a terminal or a base station as one terminal simultaneously transmits and receives a signal by using these plurality of component carriers. Specifically, according to the CA technology, a terminal and a base station may transmit and receive a signal using a broadband using the plurality of component carriers in an uplink (UL) and a downlink (DL), respectively, and at this time, each component carrier is located in different frequency bands. Hereinafter, the uplink means a communication link through which a terminal transmits a signal to a base station, and the downlink means a communication link through which a base station transmits a signal to a terminal. At this time, the number of uplink component carriers and downlink component carriers may be different from each other.

A dual connectivity or multi connectivity technology is a technology that increases frequency usage efficiency from a perspective of a terminal or a base station, as one terminal is connected to a plurality of different base stations and transmit and receive a signal simultaneously using carriers in each of a plurality of base stations located in different frequency bands. A terminal may simultaneously transmit and receive traffic by being connected to a first base station (e.g., a base station that provides a service using an LTE technology or a 4th generation mobile communication technology) and a second base station (e.g., a base station that provides a service using a new radio (NR) technology or a 5th generation mobile communication technology). At this time, frequency resources used by each base station may be located in different bands. As such, a method of operating based on dual connectivity method of LTE and NR may be called 5G non-standalone (NSA).

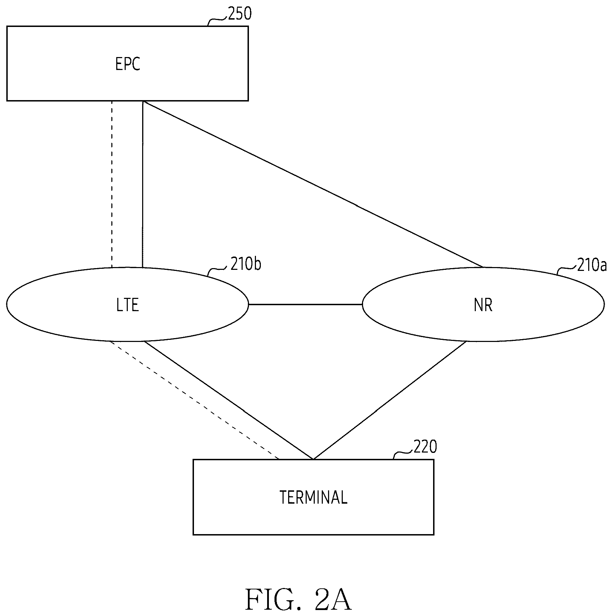

FIG. 2A illustrates an example of a 5th generation (5G) non-standard alone (NSA) system.

Referring to FIG. 2A, a 5G NSA system includes an NR RAN 210a, an LTE RAN 210b, a terminal 220, and an evolved packet core (EPC) 250. The NR RAN 210a and the LTE RAN 210b may be connected to the EPC 250, and the terminal 220 may simultaneously receive a service from one or both of the NR RAN 210a and the LTE RAN 210b. The NR RAN 210a includes at least one NR base station, and the LTE RAN 210b includes at least one LTE base station. Herein, an NR base station may be referred to as a '5th generation node', a 'next generation nodeB (gNB), or another term having a technical meaning equivalent thereto. In addition, the NR base station may have a structure separated into a central unit (CU) and a digital unit (DU), and, the CU may have a structure separated into a CU-control plane (CP) unit and a CU- user plane (UP) unit.

In a structure such as FIG. 2A, the terminal 220 may perform radio resource control (RRC) access through a first base station (e.g., a base station belonging to the LTE RAN 210b) and receive a service for a function (e.g., connection management, mobility management, and the like ) provided in a control plane. In addition, the terminal 220 may receive an additional radio resource for transmitting and receiving data through a second base station (e.g., a base station belonging to the NR RAN 210a). This dual connectivity technology using LTE and NR may be referred to as E- evolved universal terrestrial radio access (UTRA)-NR dual connectivity (EN-DC). Similarly, a dual connectivity technology in which the first base station uses an NR technology and the second base station uses an LTE technology is referred to as NR - E-UTRA dual connectivity (NE-DC). In addition, various embodiments may be applied to various forms of multiple connectivity and carrier aggregation technologies, other than these. In addition, various embodiments may be applied even in a case that a first system using a first communication technology and a second system using a second communication technology are implemented in one apparatus or in a case that the first base station and the second base station are located in the same geographic location.

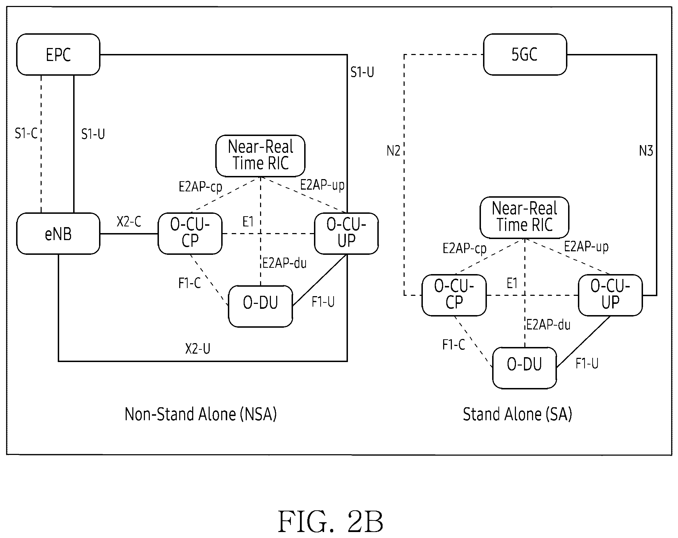

FIG. 2B illustrates an example of an architecture for an O-RAN. For a purpose of E2-SM-key performance indicator (KPI) monitoring (KPIMON) of an E2 service model, an O-RAN non-stand alone mode within multi-connectivity operation using E-UTRA and NR radio access technology may be considered, while an E2 node may be assumed to be in an O-RAN stand alone mode.

Referring to FIG. 2B, in a deployment of the O-RAN non-stand alone mode, an eNB is connected to an EPC through an S1-C/S1-U interface, and is connected to an O-CU-CP through an X2 interface. An O-CU-CP for a deployment of the O-RAN stand alone mode may be connected to a 5G core (5GC) through an N2/N3 interface.

Currently, discussions are underway on improving and enhancing an initial 5G mobile communication technology in consideration of services that a 5G mobile communication technology was intended to support and physical layer standardization for a technology such as Vehicle-to-Everything (V2X) to assist driving decision of an autonomous vehicles based on their location and status information transmitted by the vehicle and enhance user convenience, New Radio Unlicensed (NR-U) for a purpose of operating a system that meet various regulatory requirements in an unlicensed band, NR terminal low power consumption technology (UE Power Saving), Non-Terrestrial Network (NTN), which a terminal-satellite direct communication for securing coverage in areas where communication with terrestrial networks is impossible, positioning, and the like, is in progress.

Additionally, standardization of wireless interface architecture/protocol for a technology such as Industrial Internet of Things (IIoT) to support a new service through linkage and convergence with another industry, Integrated Access and Backhaul (IAB) to provide a node for expanding a network service area by integrating and supporting a wireless backhaul link and an access link, Mobility Enhancement including Conditional Handover and Dual Active Protocol Stack (DAPS) handover, 2-step RACH for NR to simplify a random access procedure, and the like is in progress, and standardization of a system architecture/service field for 5G baseline architecture (e.g., Service based Architecture, and Service based Interface) for grafting Network Functions Virtualization (NFV) and Software-Defined Networking (SDN) technologies and Mobile Edge Computing (MEC) that receives a service based on a location of a terminal is also in progress.

If such a 5G mobile communication system is commercialized, connected devices in an explosive increasing trend will be connected to a communication network, and accordingly, it is expected that a function and performance of the 5G mobile communication system will be strengthened and an integrated operation of the connected devices will be required. To this end, eXtended Reality (XR) to efficiently support Augmented Reality (AR), Virtual Reality (VR), and Mixed Reality (MR), improving 5G performance and reducing complexity using Artificial Intelligence (AI) and Machine Learning (ML), AI service support, metaverse service support, drone communication and the like.

In addition, this development of the 5G mobile communication system should be based on development of a multi-antenna transmission technology such as a new waveform, Full Dimensional MIMO (FD-MIMO), an Array Antenna, and a Large Scale Antenna, a metamaterial-based lens and antenna to improve coverage of a terahertz band signal, a high-dimensional spatial multiplexing technology using Orbital Angular Momentum (OAM), and a Reconfigurable Intelligent Surface (RIS) technology to ensure coverage in a terahertz band of a 6G mobile communication technology, as well as a Full Duplex technology, an AI-based communication technology that utilizes a satellite and an artificial intelligence from a design stage and internalizes an end-to-end AI support function to realize system optimization, and next-generation distributed computing technology that realize a service with complexity beyond a limit of a terminal computing capability by utilizing ultra-high performance communication and a computing resource, to enhance frequency efficiency and improve a system network of the 6G mobile communication technology, and the like.

In FIGS. 1 to 2B, an example of 4G and/or 5G environments have been described, but this description does not limit a scope of a communication environment of embodiments of the present disclosure. A technical principle according to embodiments of the present disclosure may also be applied to 6G and post-6G communication technologies and network environments.

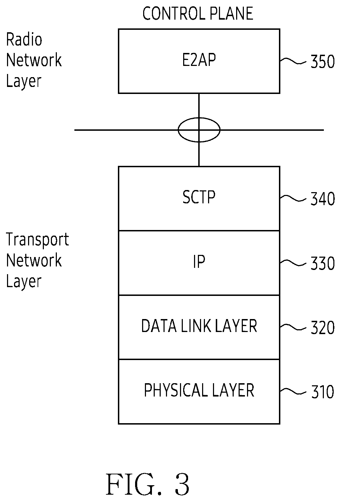

FIG. 3 illustrates a protocol stack of an E2 application protocol message in a wireless access network according to embodiments of the present disclosure. Referring to FIG. 3, a control plane includes a transport network layer and a radio network layer. The transport network layer includes a physical layer 310, a data link layer 320, an internet protocol (IP) 330, and a stream control transmission protocol (SCTP) 340.

The radio network layer includes an E2AP 350. The E2AP 350 is used to transmit a subscription message, an indication message, a control message, a service update message, and a service query message, and is transmitted in a higher layer of the SCTP 340 and the IP 330.

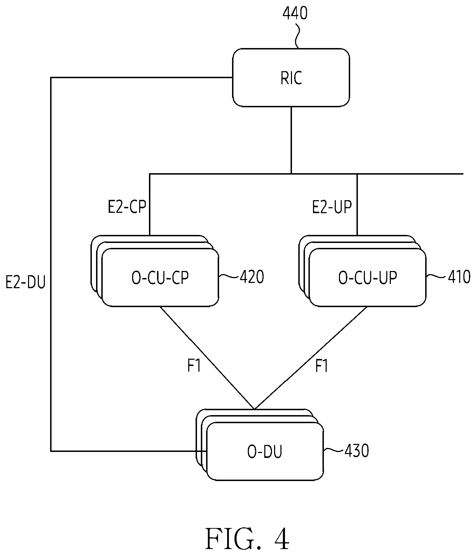

FIG. 4 illustrates an example of a connection between a base station and a radio access network intelligence controller (RIC) in a wireless access network according to embodiments of the present disclosure.

Referring to FIG. 4, an RIC 440 is connected to an O-CU-CP 420, an O-CU-UP 410, and an O-DU 430. The RIC 440 is an apparatus for customizing RAN functionality for a new service or regional resource optimization. The RIC 440 may provide a function such as network intelligence (e.g., policy enforcement, or handover optimization), resource assurance (e.g., radio-link management, or advanced self-organized-network (SON)), resource control (e.g., load balancing, or slicing policy), and the like. The RIC 440 may communicate with the O-CU-CP 420, the O-CU-UP 410, and the O-DU 430. The RIC 440 may be connected to each node through an E2-CP, E2-UP, and E2-DU interface. In addition, an interface between an O-CU-CP and a DU and between an O-CU-UP and the DU may be referred to as an F1 interface. In the following description, a DU and an O-DU, a CU-CP and an O-CU-CP, a CU-UP and an O-CU-UP may be used interchangeably.

FIG. 4 exemplifies the one RIC 440, but a plurality of RICs may exist according to various embodiments. The plurality of RICs may be implemented with a plurality of hardware located in the same physical location or may be implemented through virtualization using one hardware.

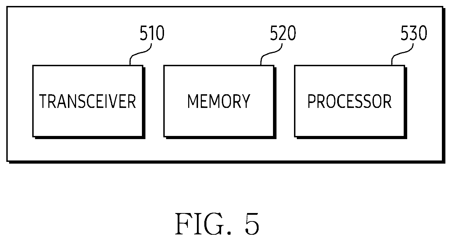

FIG. 5 illustrates a configuration of an apparatus in a wireless access network according to embodiments of the present disclosure. A structure exemplified in FIG. 5 may be understood as a configuration of an apparatus having at least one function of the above-described Near-RT RIC, Non-RT RIC, O-CU-CP, O-CU-UP, and O-DU. A terms '...unit, '...device', and the like used below mean a unit that processes at least one function or operation, and this may be implemented by hardware or software, or a combination of hardware and software.

Referring to FIG. 5, an apparatus may include a transceiver 510, memory 520, and a processor 530.

The transceiver 510 provides an interface for performing communication with other apparatuses in a network. That is, the transceiver 510 converts a bit stream transmitted from an apparatus to another apparatus into a physical signal, and converts a physical signal received from the other apparatus into a bit stream. That is, the transceiver 510 may transmit or receive a signal. Accordingly, the transceiver 510 may be referred to as a modem, a communication unit, a transmit unit, a receive unit, or a transmit/receive unit. At this time, the transceiver 510 enables the apparatus to communicate with other apparatuses or a system through a backhaul connection (e.g., a wired backhaul or a wireless backhaul) or through the network. The transceiver 510 may include one or more transceivers.

The memory 520 stores data such as a basic program, an application program, and setting information for an operation of the apparatus. The memory 520 may be configured with volatile memory, non-volatile memory, or a combination of the volatile memory and the non-volatile memory. In addition, the memory 520 provides stored data according to a request of the processor 530. The memory 520 may be referred to as a storage unit.

The processor 530 controls overall operations of the apparatus. For example, the processor 530 transmits and receives a signal through the transceiver 510. In addition, the processor 530 writes and reads data to the memory 520. The processor 530 may be referred to as a control unit. To this end, the processor 530 may be configured with a plurality of processors or may include at least one sub-processor. According to various embodiments, the processor 530 may control the apparatus to perform operations according to various embodiments described in the present disclosure.

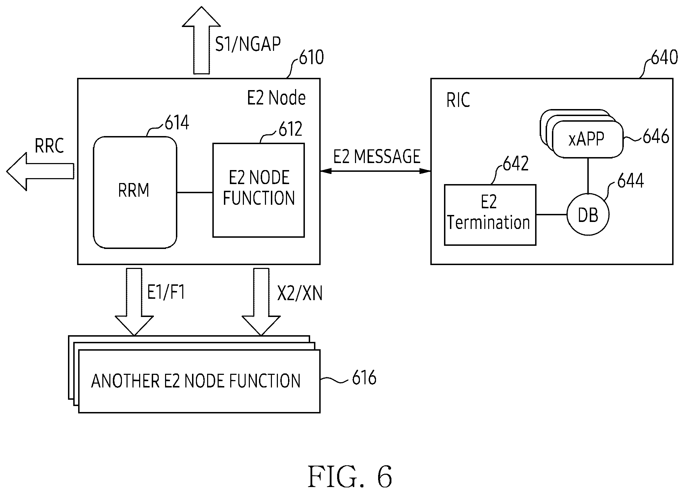

FIG. 6 illustrates a logical function related to an E2 message of an E2 node and an RIC in a wireless access network according to embodiments of the present disclosure.

Referring to FIG. 6, an RIC 640 and an E2 node 610 may transmit or receive an E2 message to or from each other. For example, the E2 node 610 may be an O-CU-CP, an O-CU-UP, an O-DU, or a base station. A communication interface of an E2 node may be determined according to a type of the E2 node 610. For example, the E2 node 610 may perform communication with another E2 node 616 through an E1 interface or an F1 interface. In addition, for example, the E2 node 610 may perform communication with the E2 node 616 through an X2 interface or an XN interface. In addition, for example, the E2 node 610 may perform communication through an S1 interface or a next generation application protocol (NGAP) interface (i.e., an interface between a next generation (NG) RAN node and an AMF).

The E2 node 610 may include an E2 node function 612. The E2 node function 612 is a function corresponding to a specific xApp (application S/W) 646 installed in the RIC 640. For example, in a case of a KPI monitor, a KPI monitor collection S/W is installed in the RIC 640, and the E2 node 610 may include the E2 node function 612 that generates KPI parameters and then transmits an E2 message including the KPI parameter to E2 termination 642 located in the RIC 640. The E2 node 610 may include radio resource management (RRM) 614. The E2 node 610 may manage a resource provided to a wireless network for a terminal.

The E2 termination 642 located in the RIC 640, which is termination of the RIC 640 for the E2 message, performs a function of interpreting an E2 message transmitted by the E2 node 610 and then transmitting it to the xApp 646. A database (DB) 644 located in the RIC 640 may be used for the E2 termination 624 or the xApp 646.

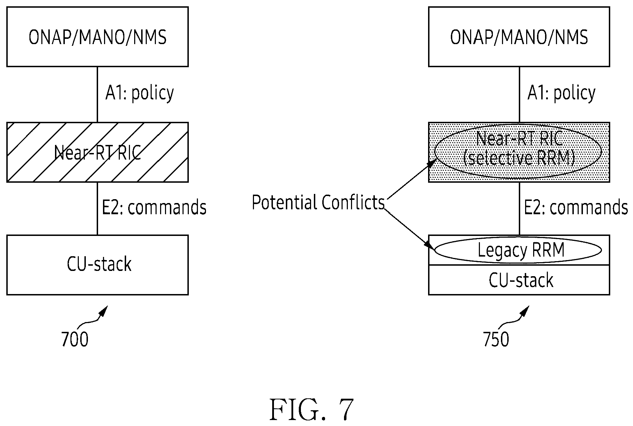

FIG. 7 illustrates examples of function separation between an E2 node and an RIC according to embodiments of the present disclosure. An O-RAN standard provides the functional separation between the E2 node and the RIC. For example, the E2 node may be a CU. The RIC may be a Near RT RIC. The RIC may be connected to open network automation platform (ONAP)/management and orchestration (MANO)/ network management system (NMS) through an A1 interface. The RIC may be connected to the E2 node through an E2 interface. The E2 interface may deliver commands. A functional separation option may include a functional separation 700 in which entire radio resource management (RRM) is managed by a Near-RT RIC, and a functional separation 750 in which RRM is selectively managed by the Near-RT RIC.

The Near-RT RIC will support E2 with an open logical interface targeting a multi-vendor environment, regardless of implementation of a specific RRC-RRM algorithm located in a near RT-RIC. In the present disclosure, E2 Service Model Radio Interface Control (E2SM-RIC) paired with E2SM-NI, which may perform injection/modification/configuration of Per UE RRC message for each I/F and a network entity (NE) may be proposed. In other words, the Near RT RIC may be improved in a direction of the functional separation 700 gradually from the functional separation 750. E2 may be developed as the open logical interface targeting the multi-vendor environment, independent of implementation of the specific RRC-RRM algorithm located in the near RT-RIC.

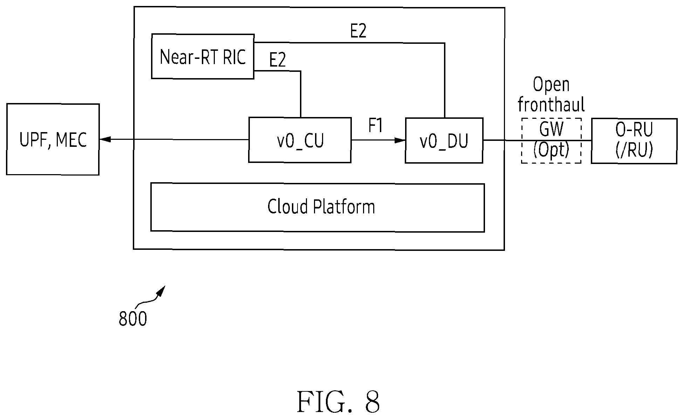

FIG. 8 illustrates an implementation example of an E2 node and an RIC according to embodiments of the present disclosure. In a scenario of an implementation example 800, an E2 node (e.g., an O-DU, an O-CU, an O-CU-CP, and an O-CU-UP) and an RIC may be configured on an apparatus (e.g., a server) by being virtualized on a cloud platform (e.g., an open chassis and a blade specification edge cloud). This scenario may support distribution in a dense urban area with an abundant fronthaul capacity that allows a base band unit (BBU) function pooled at a central location with low latency enough to meet an O-DU latency requirement. Therefore, it may not be necessary to attempt to centralize an RIC close to real time (RT) greater than or equal to a limit of being able to centralize an O-DU function. According to an embodiment, an E2SM-RIC may be optimized for an O-RAN distribution scenario in which a Near-RT RIC, an O-CU, and an O-DU are implemented on a cloud platform (e.g., an O-Cloud Platform).

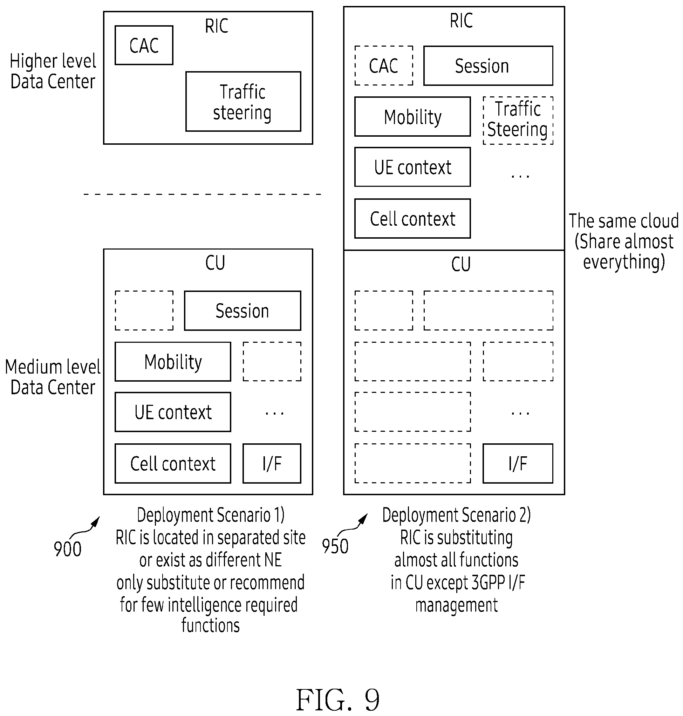

FIG. 9 illustrates examples of function separation between a centralized unit (CU) and an RIC according to embodiments of the present disclosure.

Referring to FIG. 9, functions for the CU and the RIC may be separately or jointly implemented. According to a deployment of the functions, a deployment scenario may be determined. For example, the functions may be distributed according to a deployment scenario #1 900. It may be configured to replace only at least one intelligence essential function (e.g., traffic steering and a cell admission control (CAC) function). In the deployment scenario #1 900, the RIC may be located at a separate site or may exist only as another NE. For another example, the functions may be distributed according to a deployment scenario #2 950. In the deployment scenario #2 950, the RIC may replace almost all functions of the CU (e.g., a mobility function, a session function, a UE context function, and a cell context function) except for 3GPP I/F management. In the deployment scenario #2 950, the RIC may be implemented as an apparatus (e.g., a server apparatus) such as the CU. As an example, in the same cloud, the RIC may share all functions with the CU.

Two scenarios are illustrated in FIG. 9, but other scenarios may be applied. As an example, in the deployment scenario #1 900, the mobility function may be performed by the RIC other than the CU. In addition, as an example, in the deployment scenario #1 900, the UE context function may be performed by the RIC other than the CU. In addition, as an example, in the deployment scenario #1 900, the session function may be performed by the RIC other than the CU.

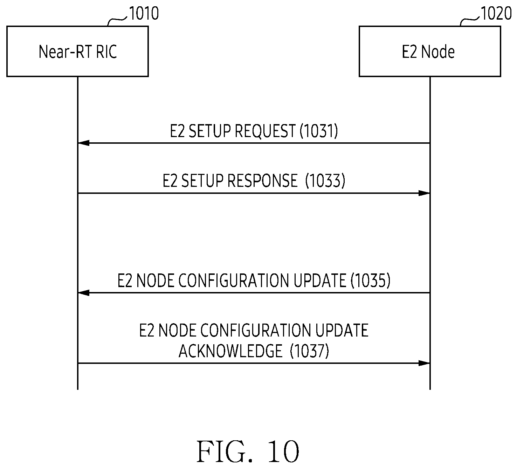

FIG. 10 illustrates examples of an E2 application protocol (E2AP) procedure between an E2 node and a Near-RT RIC. In FIG. 10, an E2 NODE SETUP procedure and an E2 NODE CONFIGURATION UPDATE procedure are described.

Referring to FIG. 10, a Near-RT RIC 1010 may perform communication with an E2 node 1020 through an E2 interface. The Near-RT RIC 1010 exemplifies the RIC (e.g., the RIC 640) or the Near-RT RIC described in FIGS. 1 to 9. The E2 node 1020 exemplifies the E2 node described in FIGS. 1 to 9, for example, an O-DU, an O-CU-CP, or an O-CU-UP.

In an operation 1031, the E2 node 1020 may transmit an E2 SETUP REQUEST message to the Near-RT RIC 1010. The Near-RT RIC 1010 may receive the E2 setup request message from the E2 node 1020. A purpose of an E2 setup procedure is to establish a signal connection between the E2 node 1020 and the Near-RT RIC 1010. The E2 SETUP procedure may erase existing application level configuration data of two nodes and change a configuration with received data. The E2 setup procedure may also reset the E2 interface. The E2 setup procedure may be initiated by an E2 node. The E2 node 1020 may perform basic interface setting and transmit E2 node specific configuration information to the Near-RT RIC 1010.

In an operation 1033, the Near-RT RIC 1010 may transmit an E2 SETUP RESPONSE message to the E2 node 1020. The E2 node 1020 may receive the E2 setup response message from the Near-RT RIC 1010. Meanwhile, in FIG. 10, the E2 setup procedure including the transmission of the E2 setup request message and the transmission of the E2 setup response message has been described, but embodiments of the present disclosure are not limited thereto. The E2 setup procedure may include the transmission of the E2 setup request message and transmission of an E2 SETUP FAILURE message. For example, in a case that the Near-RT RIC 1010 may not accept or does not accept a setting of the E2 node 1020, the Near-RT RIC 1010 may transmit the E2 setup failure message to the E2 node 1020.

For example, the E2 setup request message may be configured as follows.

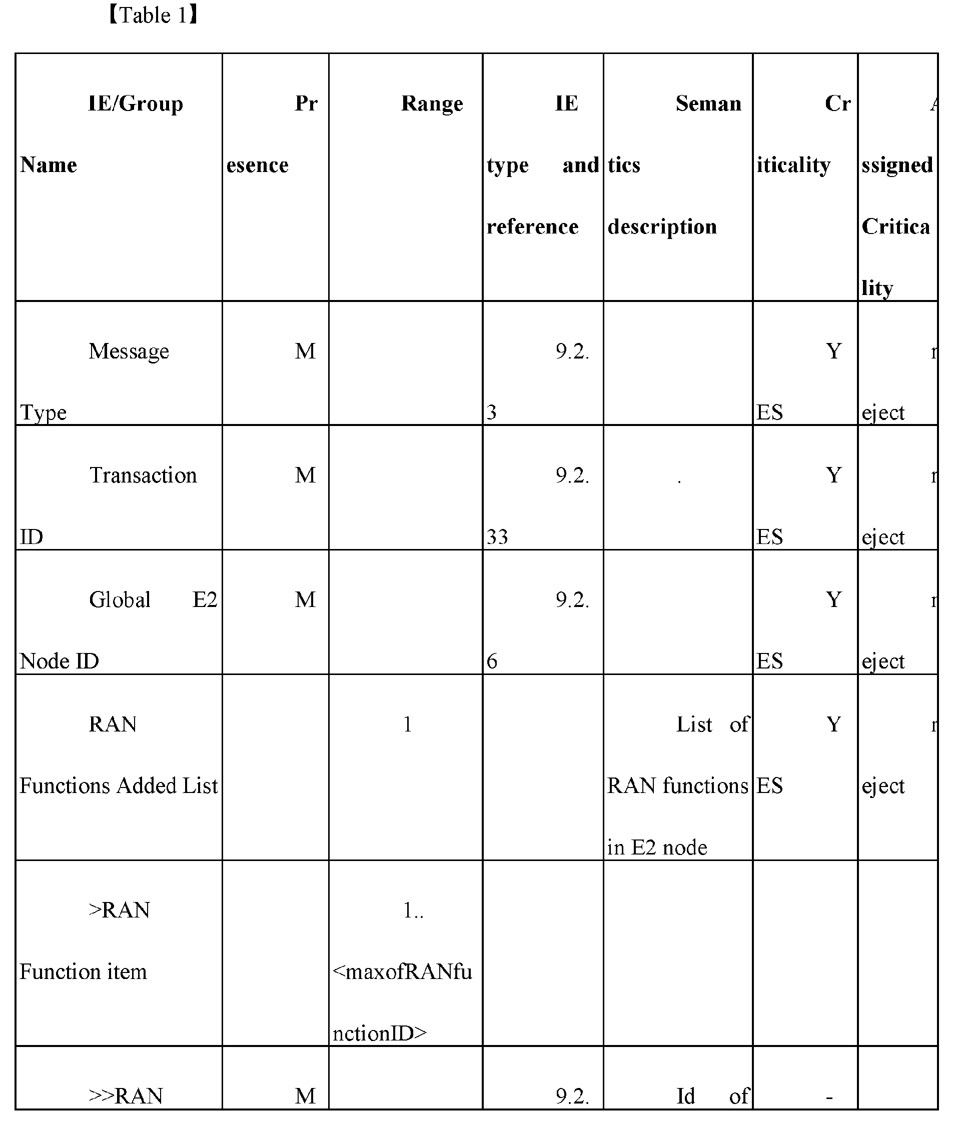

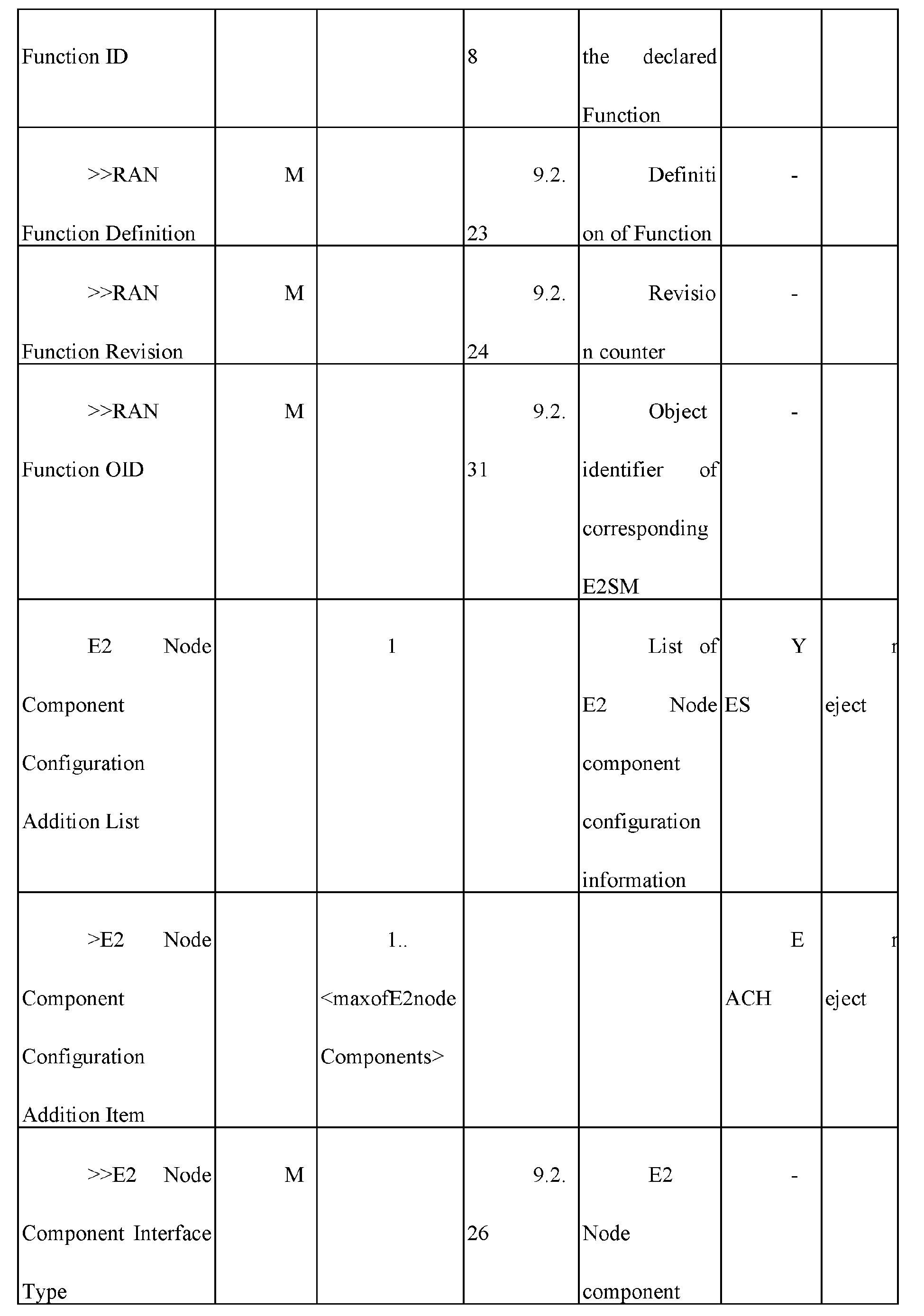

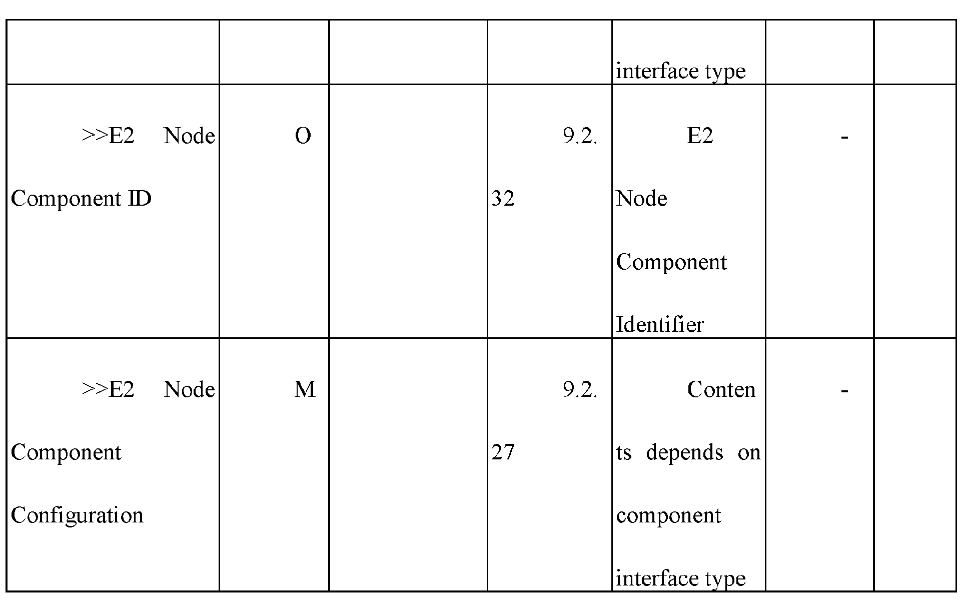

The 'Global E2 Node ID' information element (IE) indicates information for identifying the E2 node 1020 globally. For example, in a case that the E2 node 1020 is a gNB-DU, the 'Global E2 Node ID' IE may include a Global gNB ID defined in 3GPP TS 38.423 and a gNB-DU ID defined in 3GPP TS 38.473. For example, in a case that the E2 node 1020 is a gNB-CU-UP, the 'Global E2 Node ID' IE may include the Global gNB ID defined in 3GPP TS 38.423 and a gNB-UP ID defined in 3GPP TS 38.463. 'RAN Functions Added List' IE may include a list of a RAN function to be added. The list may include a RAN function ID, a RAN function definition, a RAN function revision, and a RAN function object identifier (OID).

'E2 Node Component Configuration Addition List' IE may include a list of an E2 node component configuration to be added. The list may include one or more E2 node component configuration items to be added. The E2 node component configuration may be used to transmit E2 node component configuration update information of a specific E2 node component. In all cases, information is a data structure defined by an appropriate 3GPP standard and delivered to OCTET STRING, which is exemplified as follows. 'Component Addition List' of Table 3 may be referenced.

**[Table 2]**

| IE/Group Name | Pr esence | Ra nge | IE type and reference | Semantics description |
|---|---|---|---|---|
| SEQUENCE | M | | | |
| >E2 Node Component Request Part | M | | OCTET STRING | Contents depend on component type and used to carry new or updated component configuration. See the table below. |
| >E2 Node Component Response Part | M | | OCTET STRING | Contents depend on component type and used to carry new or updated component configuration. See the table below. |

**[Table 3]**

| | **Component Addition list** | | **Component Update list** | |
|---|---|---|---|---|
| **E2 Node component message content** | **Request part** | **Response part** | **Request part** | **Response part** |
| gNB case | | | | |
| >NG(AMF Name) | NG SETUP REQUEST, 3GPP 38.413 [19] clause 9.2.6.1 | NG SETUP RESPONSE, 3GPP 38.413 [19] clause 9.2.6.2 | RAN CONFIGURATI ON UPDATE, 3GPP 38.413 [19] clause 9.2.6.4 Or AMF CONFIGURATI ON UPDATE, 3GPP 38.413 [19] clause 9.2.6.7 | RAN CONFIGURATI ON UPDATE ACKNOWLED GE, 3GPP 38.413 [19] clause 9.2.6.5 Or AMF CONFIGURATI ON UPDATE ACKNOWLED GE, 3GPP 38.413 [19] clause 9.2.6.8 |
| >Xn (Neighbour Global NG-RAN Node ID ) | XN SETUP REQUEST, 3GPP 38.423 [20] clause 9.1.3.1 | XN SETUP RESPONSE, 3GPP 38.423 [20] clause 9.1.3.2 | NG-RAN NODE CONFIGURATI ON UPDATE, 3GPP 38.423 [20] clause 9.1.3.4 | NG-RAN NODE CONFIGURATI ON UPDATE ACKNOWLED GE, 3GPP 38.423 [20] clause 9.1.3.5 |
| >E1 (gNB-CU-UP ID) | GNB-CU-UP E1 SETUP REQUEST, 3GPP 38.463 [21] clause 9.2.1.4 Or GNB-CU-CP E1 SETUP REQUEST, 3GPP 38.463 [21] clause 9.2.1.7 | GNB-CU-UP E1 SETUP RESPONSE, 3GPP 38.463 [21] clause 9.2.1.5 Or GNB-CU-CP E1 SETUP RESPONSE, 3GPP 38.463 [21] clause 9.2.1.8 | GNB-CU-UP CONFIGRATIO N UPDATE, 3GPP 38.463 [21] clause 9.2.1.10 Or GNB-CU-CP CONFIGURATI ON UPDATE, 3GPP 38.463 [21] clause 9.2.1.13 | GNB-CU-UP CONFIGRATIO N UPDATE ACKNOWLED GE, 3GPP 38.463 [21] clause 9.2.1.11 Or GNB-CU-CP CONFIGURATI ON UPDATE ACKNOWLED GE, 3GPP 38.463 [21] clause 9.2.1.14 |
| >F1 (gNB-DU ID) | F1 SETUP REQUEST, 3GPP 38.473 [22] clause 9.2.1.4 | F1 SETUP RESPONSE, 3GPP 38.473 [22] clause 9.2.1.5 | GNB-DU CONFIGRATIO N UPDATE, 3GPP 38.473 [22] clause 9.2.1.7 Or GNB-CU CONFIGURATI ON UPDATE, 3GPP 38.473 [22] clause 9.2.1.10 | GNB-DU CONFIGRATIO N UPDATE ACKNOWLED GE, 3GPP 38.473 [22] clause 9.2.1.8 Or GNB-CU CONFIGURATI ON UPDATE ACKNOWLED GE, 3GPP 38.473 [22] clause 9.2.1.11 |
| >X2 (Neighbour Global eNB ID) | EN-DC X2 SETUP REQUEST, 3GPP 36.423 [25] clause 9.1.2.31 | EN-DC X2 SETUP RESPONSE, 3GPP 36.423 [25] clause 9.1.2.32 | EN-DC CONFIGURATI ON UPDATE, 3GPP 36.423 [25] clause 9.1.2.34 | EN-DC CONFIGURATI ON UPDATE ACKNOWLED GE, 3GPP 36.423 [25] clause 9.1.2.35 |

| **eNB case** | | | | |
|---|---|---|---|---|
| >NG(AMF Name) | NG SETUP REQUEST, 3GPP 38.413 [19] clause 9.2.6.1 | NG SETUP RESPONSE, 3GPP 38.413 [19] clause 9.2.6.2 | RAN CONFIGURATI ON UPDATE, 3GPP 38.413 [19] clause 9.2.6.4 Or AMF CONFIGURATI ON UPDATE, 3GPP 38.413 [19] clause 9.2.6.7 | RAN CONFIGURATI ON UPDATE ACKNOWLED GE, 3GPP 38.413 [19] clause 9.2.6.5 Or AMF CONFIGURATI ON UPDATE ACKNOWLED GE, 3GPP 38.413 [19] clause 9.2.6.8 |
| >Xn (Neighbour Global NG-RAN Node ID) | XN SETUP REQUEST, 3GPP 38.423 [20] clause 9.1.3.1 | XN SETUP RESPONSE, 3GPP 38.423 [20] clause 9.1.3.2 | NG-RAN NODE CONFIGURATION UPDATE, 3GPP 38.423 [20] clause 9.1.3.4 | NG-RAN NODE CONFIGURATION UPDATE ACKNOWLED GE, 3GPP 38.423 [20] clause 9.1.3.5 |
| >W1 (ng-eNB-DU ID) | W1 SETUP REQUEST, 3GPP 37.473 [23] clause 9.2.1.4 | W1 SETUP RESPONSE, 3GPP 37.473 [23] clause 9.2.1.5 | NG-ENB-DU CONFIGURATI ON UPDATE, 3GPP 37.473 [23] clause 9.2.1.7 Or NG-ENB-CU CONFIGURATI ON UPDATE, 3GPP 37.473 [23] clause 9.2.1.10 | NG-ENB-DU CONFIGURATI ON UPDATE ACKNOWLED GE, 3GPP 37.473 [23] clause 9.2.1.8 Or NG-ENB-CU CONFIGURATI ON UPDATE ACKNOWLED GE, 3GPP 37.473 [23] clause 9.2.1.11 |
| >S1 (MME Name) | S1 SETUP REQUEST, 3GPP 36.413 [24] clause 9.1.8.4 | S1 SETUP RESPONSE, 3GPP 36.413 [24] clause 9.1.8.5 | ENB CONFIGURATI ON UPDATE, 3GPP 36.413 [24] clause 9.1.8.7 Or MME CONFIGURATI ON UPDATE, 3GPP 36.413 [24] clause 9.1.8.10 | ENB CONFIGRATIO N UPDATE ACKNOWLED GE, 3GPP 36.413 [24] clause 9.1.8.8 Or MME CONFIGURATI ON UPDATE ACKNOWLED GE, 3GPP 36.413 [24] clause 9.1.8.11 |
| >X2(when neighbour is eNB) (Neighbour Global eNB ID) | X2 SETUP REQUEST, 3GPP 36.423 [25] clause 9.1.2.3 | X2 SETUP RESPONSE, 3GPP 36.423 [25] clause 9.1.2.4 | ENB CONFIGURATI ON UPDATE, 3GPP 36.423 [25] clause 9.1.2.8 | ENB CONFIGRATIO N UPDATE ACKNOWLED GE, 3GPP 36.423 [25] clause 9.1.2.9 |
| >X2 (when neighbour is en-gNB) (Neighbour Global eNB ID) | EN-DC X2 SETUP REQUEST, 3GPP 36.423 [25] clause 9.1.2.31 | EN-DC X2 SETUP RESPONSE, 3GPP 36.423 [25] clause 9.1.2.32 | EN-DC CONFIGURATI ON UPDATE, 3GPP 36.423 [25] clause 9.1.2.34 | EN-DC CONFIGURATI ON UPDATE ACKNOWLED GE, 3GPP 36.423 [25] clause 9.1.2.35 |

For example, the E2 setup response message may be configured as follows.

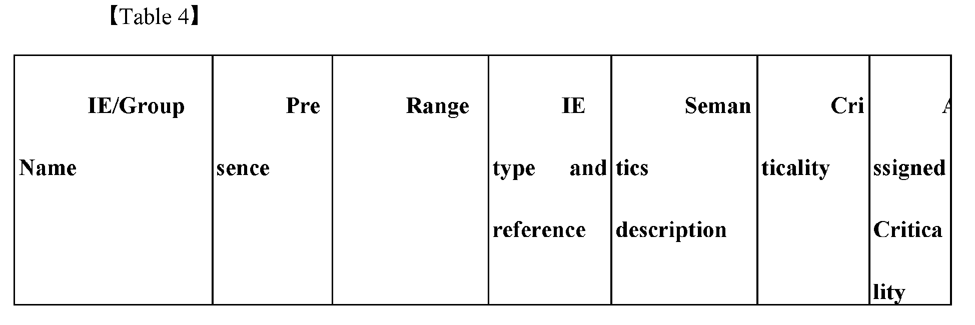

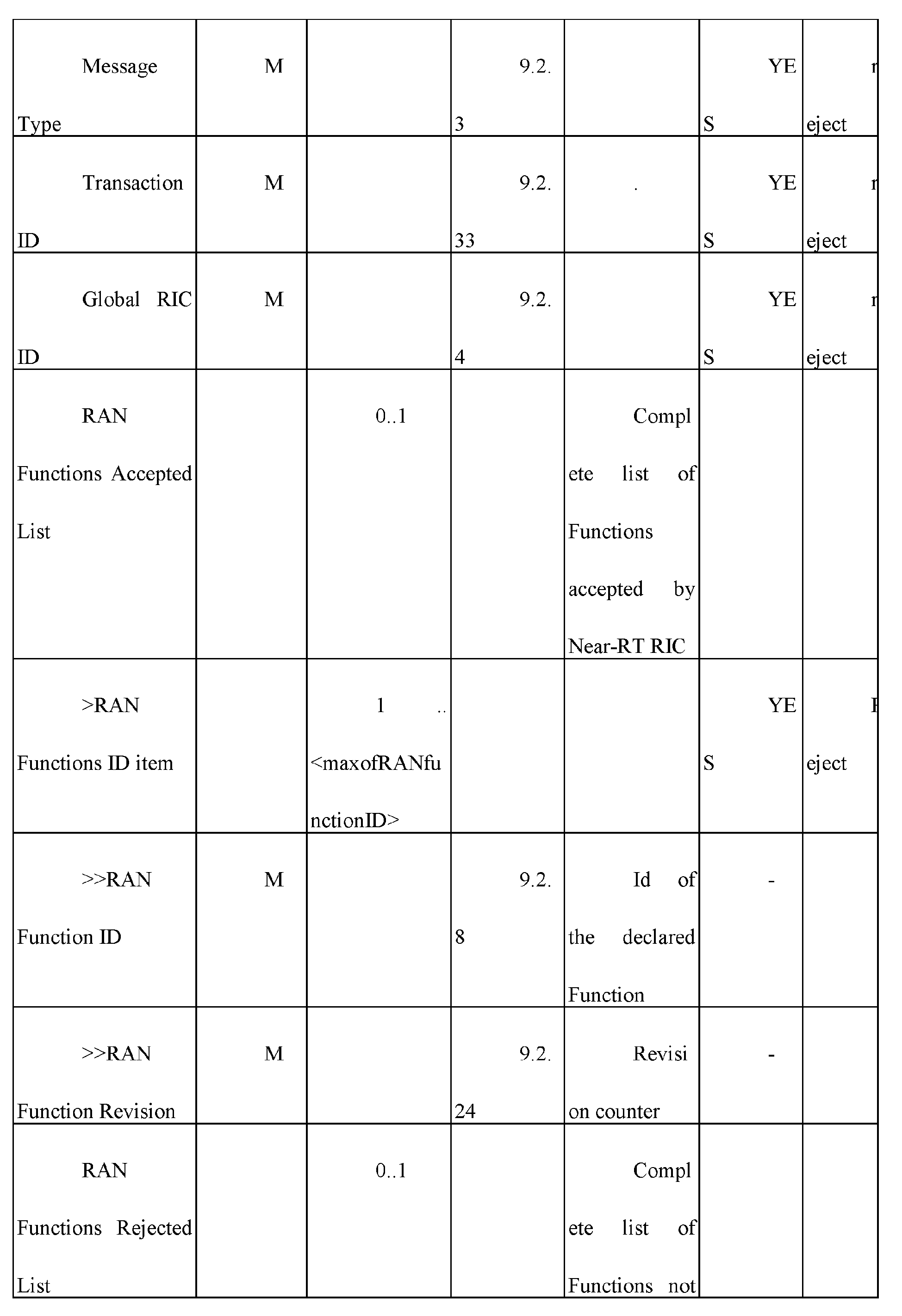

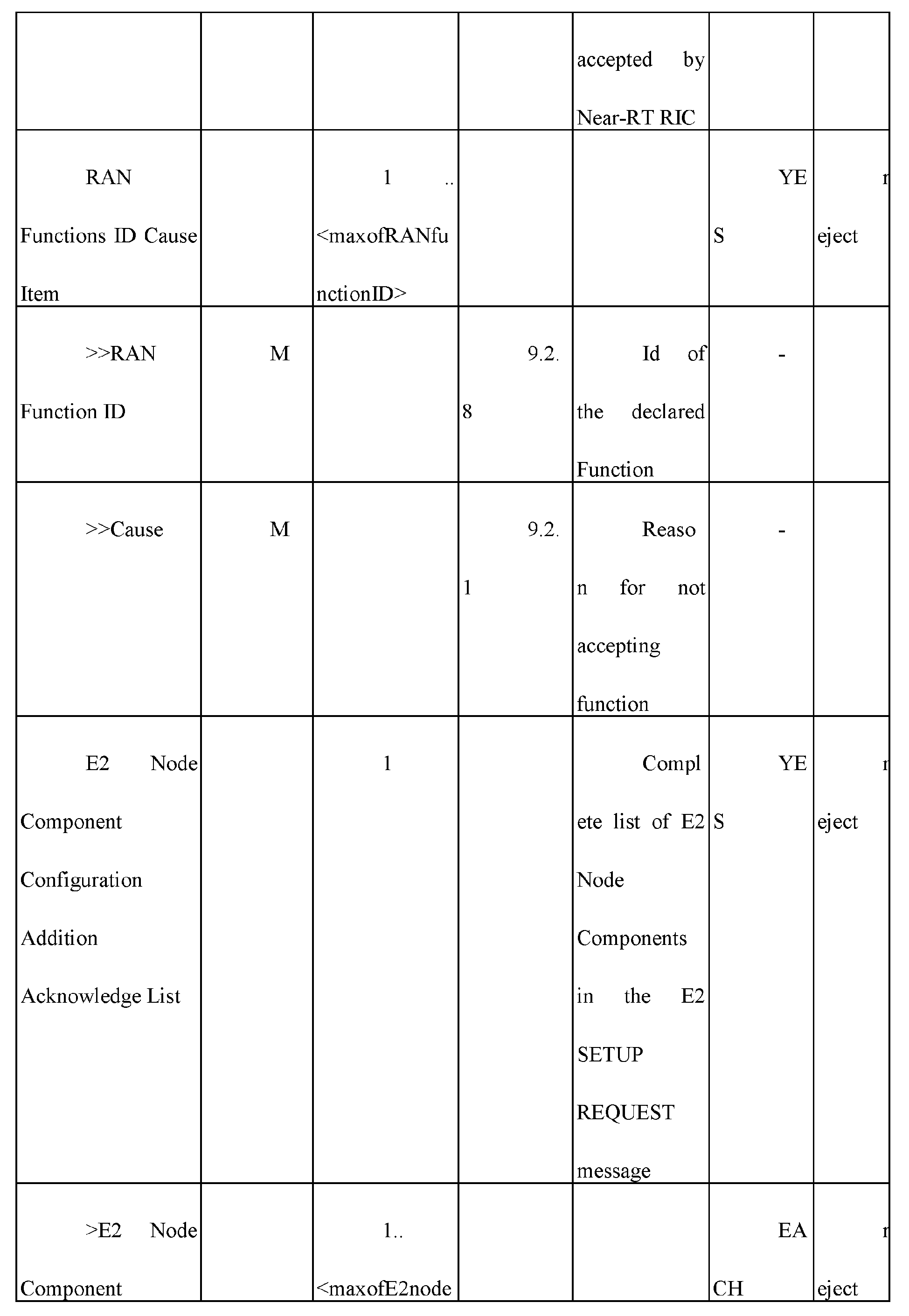

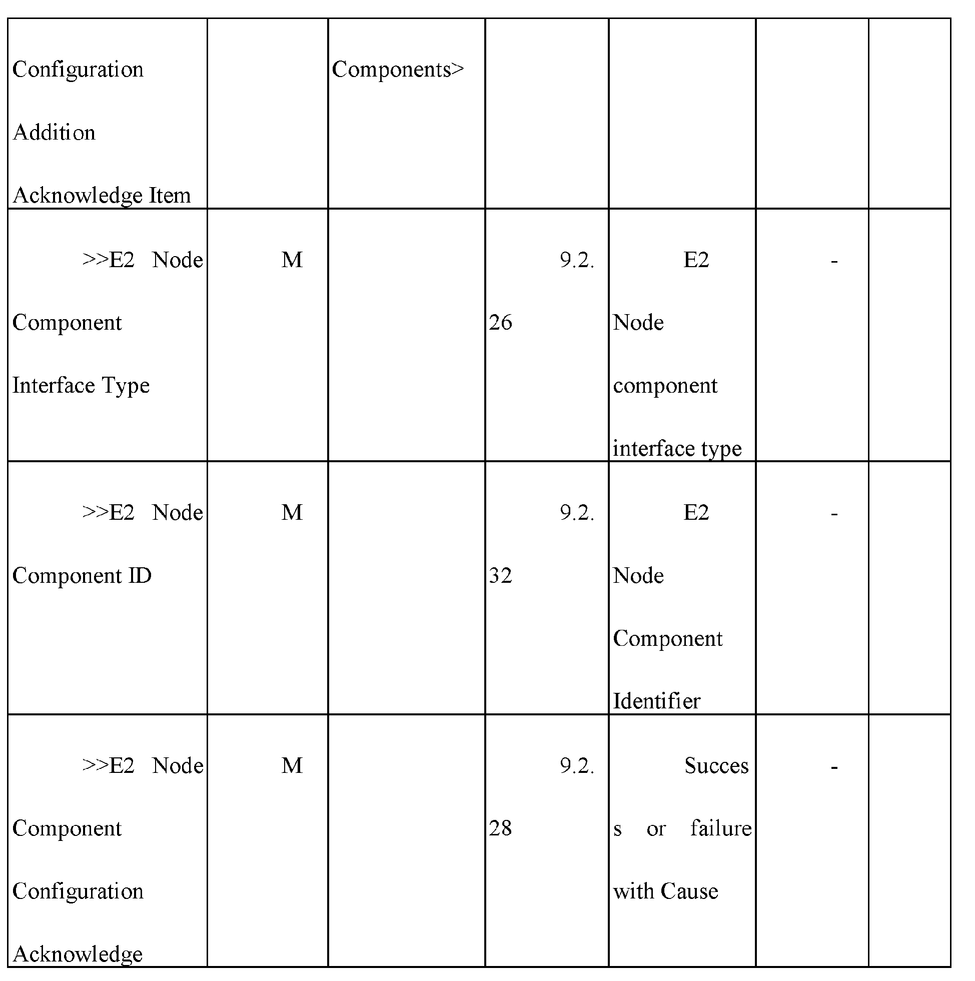

The 'RAN Functions Accepted List' IE indicates a list of accepted RAN function(s). For example, the Near-RT RIC 1010 may accept at least one RAN function among RAN function(s) added through the E2 setup request message of the E2 node 1020. 'RAN Functions Rejected List' IE indicates a list of rejected RAN function(s). For example, the Near-RT RIC 1010 may reject at least one RAN function among RAN function(s) added through the E2 setup request message of the E2 node 1020.

The 'E2 Node Component Configuration Addition Acknowledge List' IE indicates a list of an E2 node component configuration that has been acknowledged to be added. For example, the Near-RT RIC 1010 may provide feedback on at least one E2 node component configuration that has been acknowledged to be added among E2 node component configurations requested to be added through an E2 node configuration update message of the E2 node 1020.

If the E2 setup procedure is completed, the Near-RT RIC 1010 may perform communication with the E2 node 1020 through the E2 interface. After completing the E2 setup procedure, the E2 node 1020 and the Near-RT RIC 1010 may perform the E2 node configuration update procedure with the E2 node 1020. A purpose of the E2 node configuration update procedure is to update application-level E2 node configuration data required for the E2 node and the Near-RT RIC to properly interoperate through the E2 interface and to support removal of an E2 node-initiated transport network layer (TNL) connection.

In an operation 1035, the E2 node 1020 may transmit the E2 NODE CONFIGURATION UPDATE message to the Near-RT RIC 1010. The Near-RT RIC 1010 may receive the E2 node configuration update message from the E2 node 1020.

In an operation 1037, the Near-RT RIC 1010 may transmit an E2 NODE CONFIGURATION UPDATE ACKNOWLEDGE message to the E2 node 1020. The E2 node 1020 may receive the E2 node configuration update acknowledgment message from the Near-RT RIC 1010. Meanwhile, in FIG. 10, the E2 node configuration update procedure including the transmission of the E2 node configuration update message and the transmission of the E2 node configuration update acknowledgment message has been described, but embodiments of the present disclosure are not limited thereto. The E2 node configuration update procedure may include the transmission of the E2 node configuration update message and transmission of an E2 NODE CONFIGURATION UPDATE FAILURE message.

For example, the E2 node configuration update message may be configured as follows.

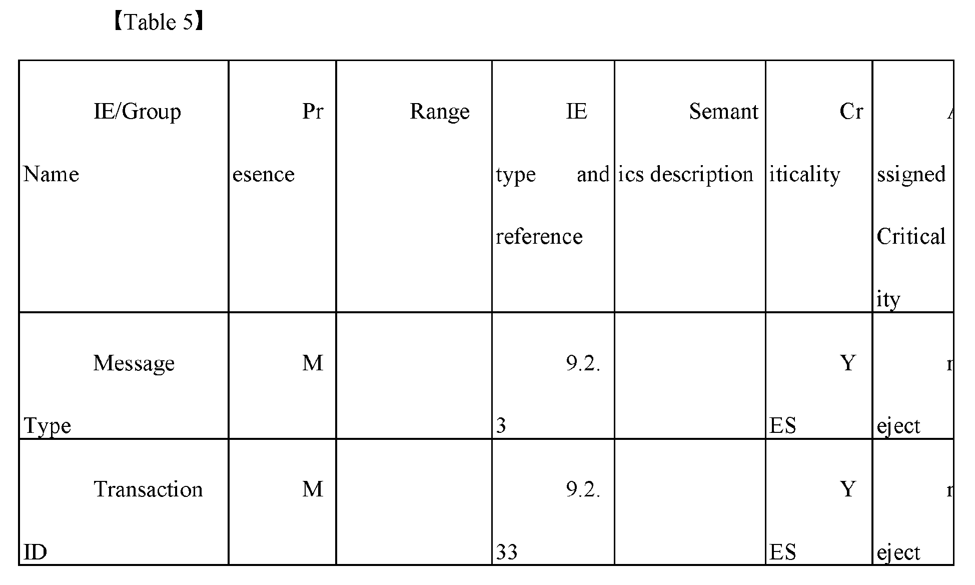

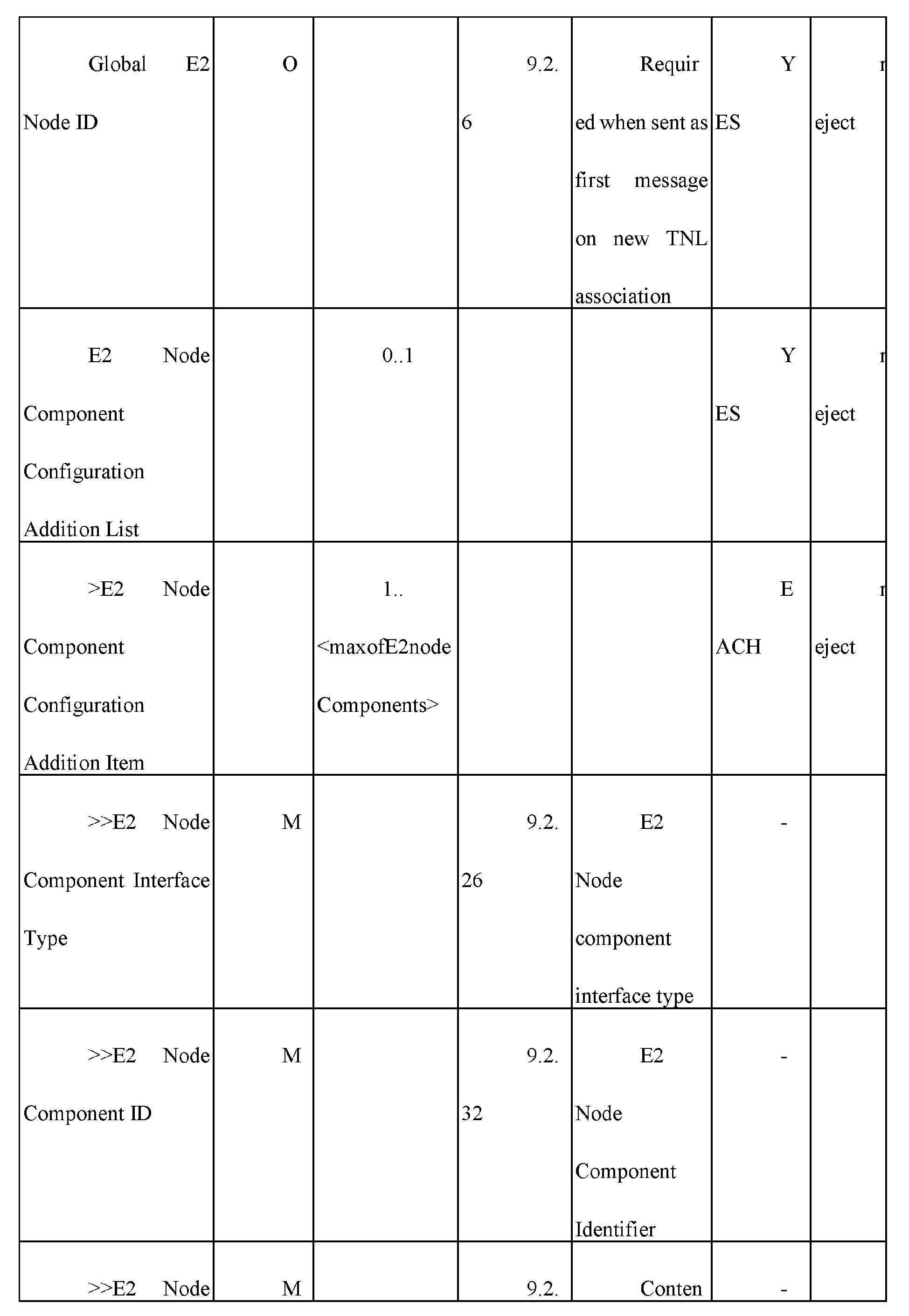

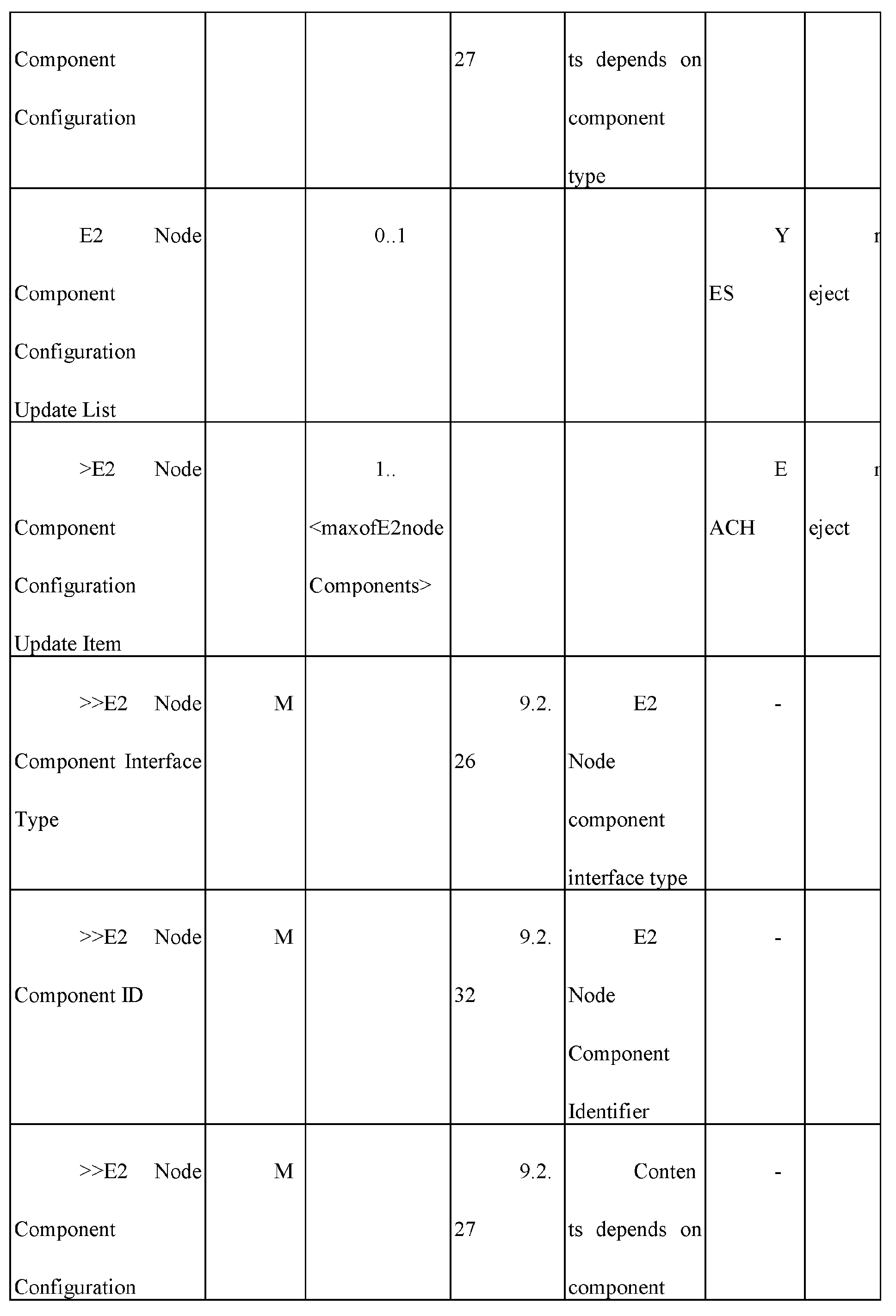

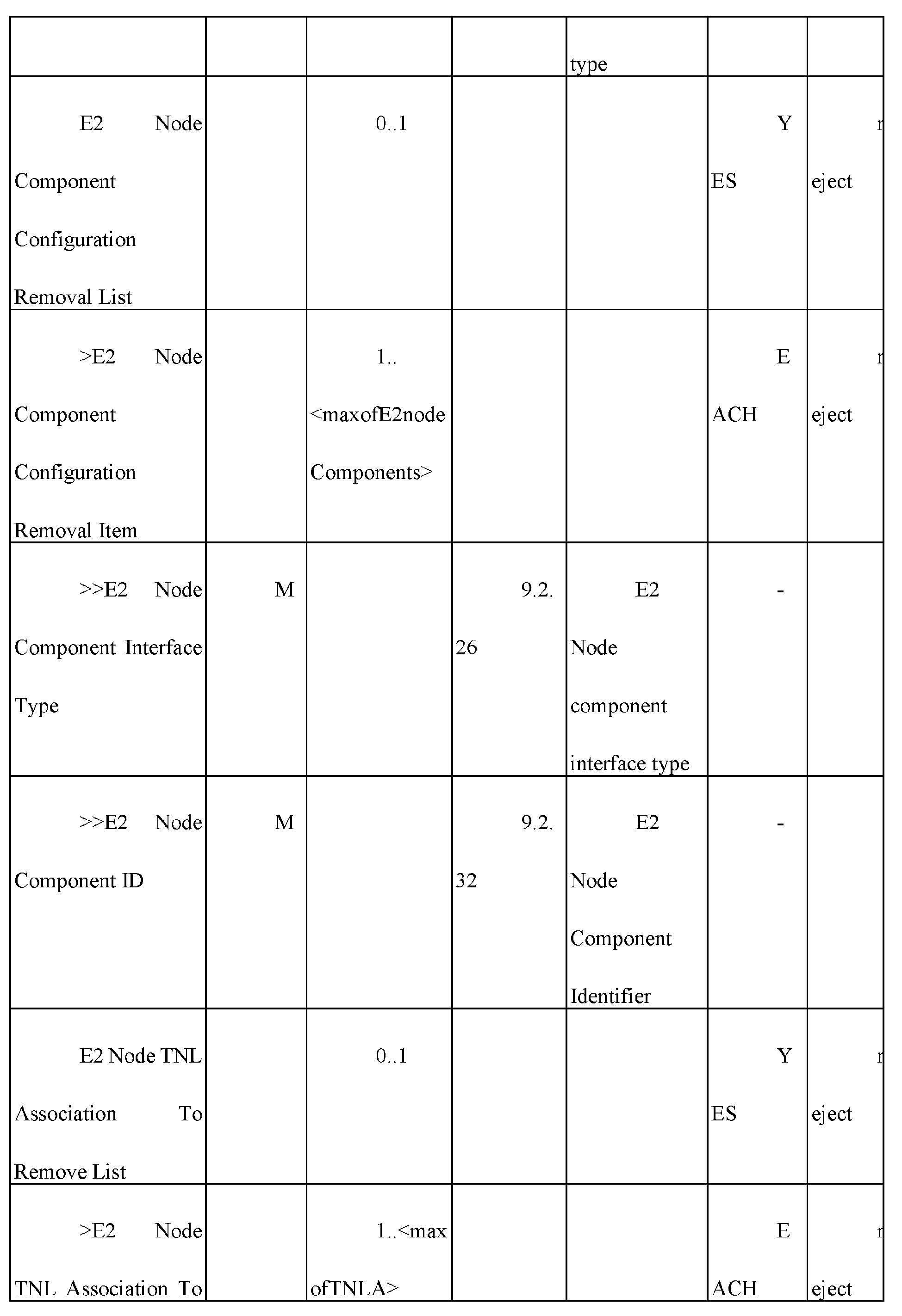

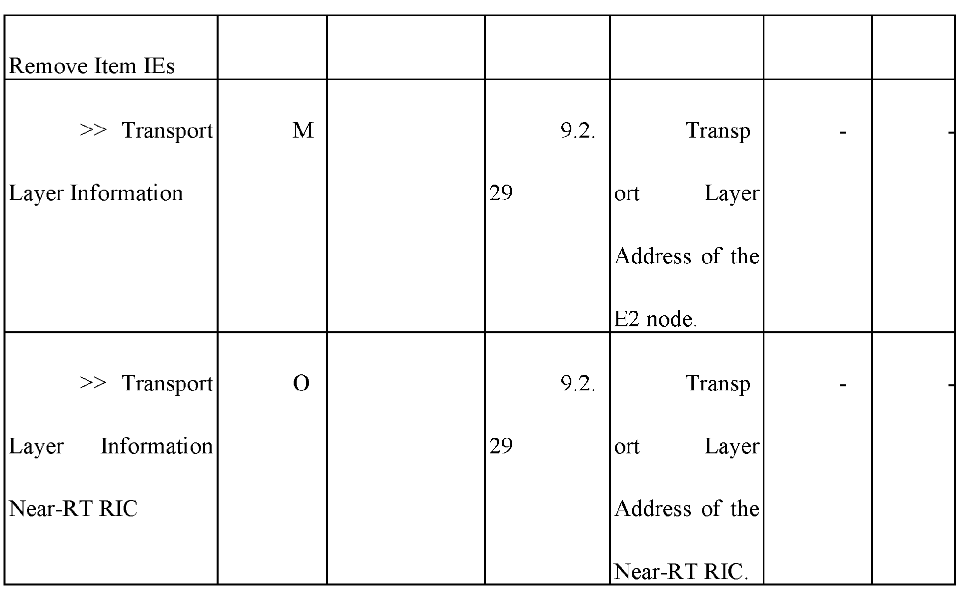

The 'E2 Node Component Configuration Addition List' IE may include a list of an E2 node component configuration to be added. The list may include one or more E2 node component configuration items to be added.

'E2 Node Component Configuration Update List' IE may include a list of an E2 node component configuration to be updated. The list may include one or more E2 node component configuration items to be updated.

'E2 Node Component Configuration Removal List' IE may include a list of an E2 node component configuration to be removed. The list may include one or more E2 node component configuration items to be removed. 'E2 Node TNL Association To Remove List' IE may include a list of a TNL connection to be removed.

In the E2 node configuration update message, the E2 node component configuration items to be added or updated may include information on the E2 node component configuration. For example, the information on the E2 node component configuration may be referred to in Table 2 and Table 3. 'Component Addition List' or 'Component Addition List' of Table 3 may be referenced.

For example, the E2 node configuration update acknowledgment message may be configured as follows.

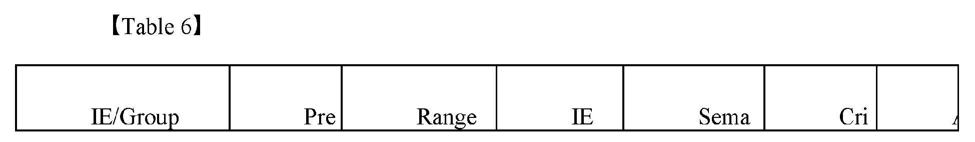

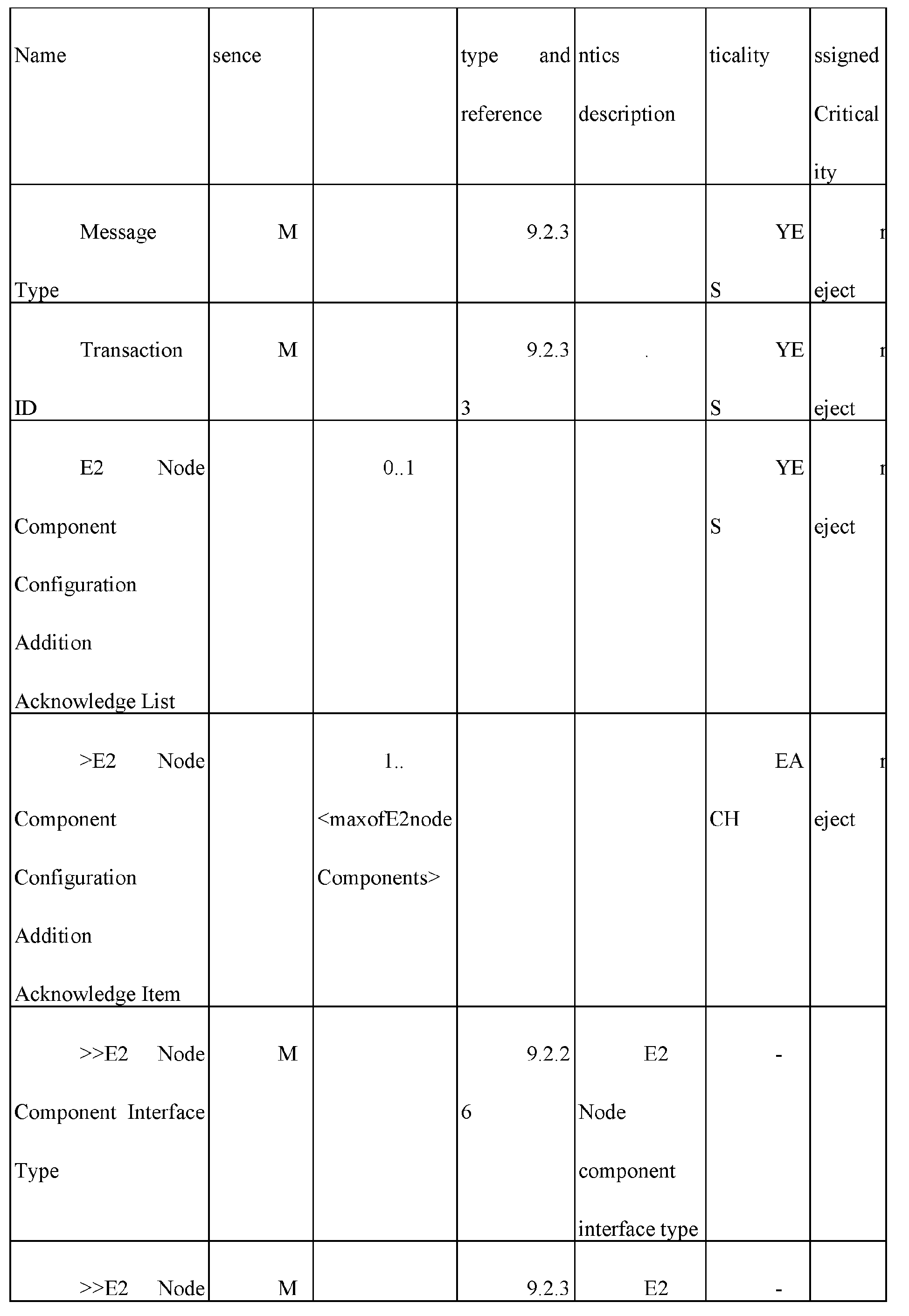

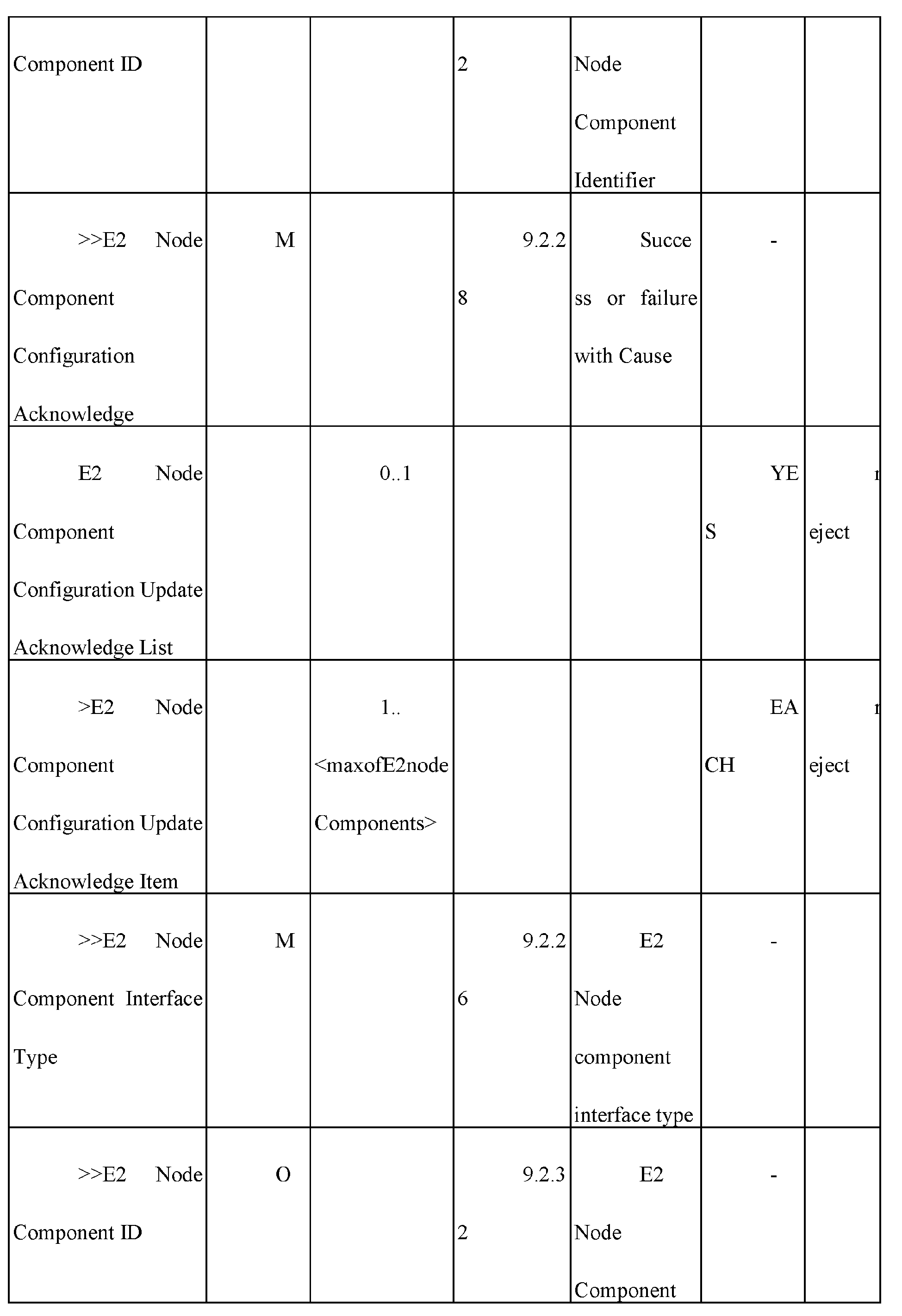

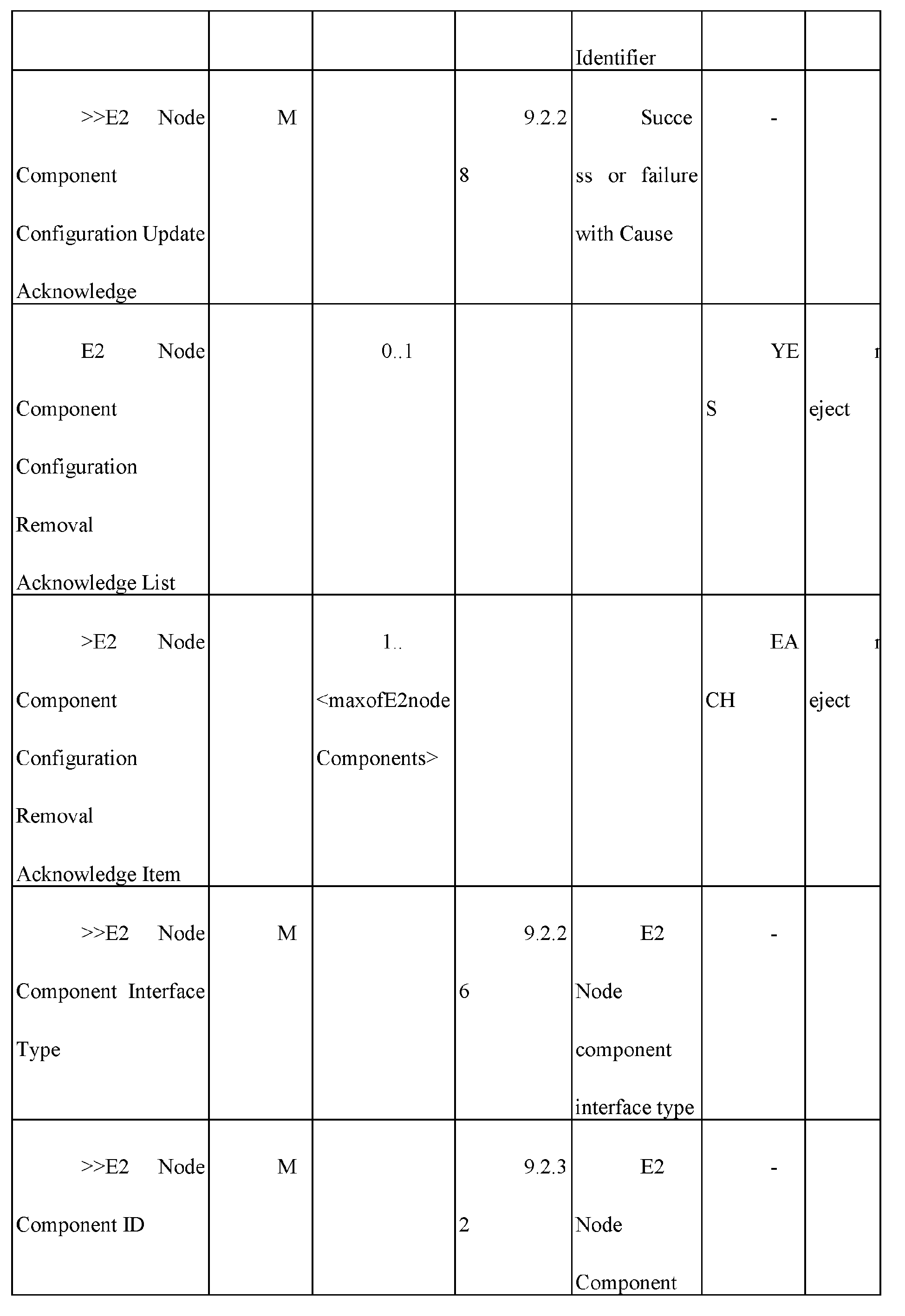

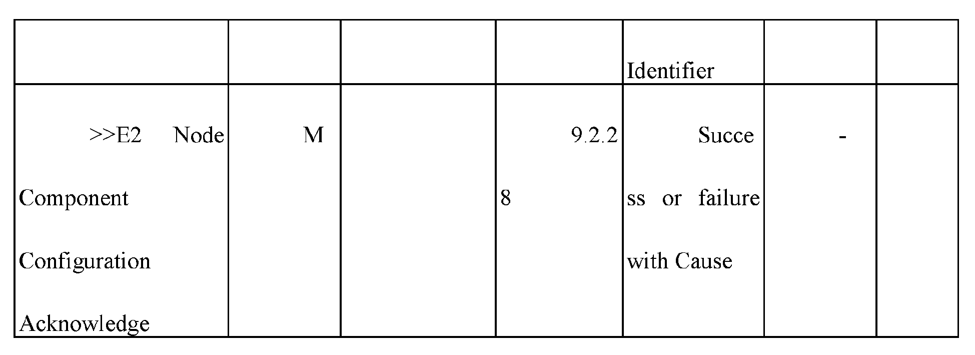

The 'E2 Node Component Configuration Addition Acknowledge List' IE indicates a list of an E2 node component configuration that has been acknowledged to be added. For example, the Near-RT RIC 1010 may provide feedback on at least one E2 node component configuration that has been acknowledged to be added among E2 node component configurations requested to be added through the E2 node configuration update message of the E2 node 1020.

The 'E2 Node Component Configuration Update Acknowledge List' IE indicates a list of an E2 node component configuration that has been acknowledged to be updated. For example, the Near-RT RIC 1010 may provide feedback on at least one E2 node component configuration that has been acknowledged to be updated among E2 node component configurations requested to be updated through the E2 node configuration update message of the E2 node 1020.

The 'E2 Node Component Configuration Removal Acknowledge List' IE indicates a list of an E2 node component configuration that has been acknowledged to be removed. For example, the Near-RT RIC 1010 may provide feedback on at least one E2 node component configuration that has been acknowledged to be removed among E2 node component configurations requested to be removed through the E2 node configuration update message of the E2 node 1020.

In an E2 standard, in the E2 setup procedure, an E2 node (e.g., O-DU) may transmit cell configuration information to a Near-RT RIC on the E2 interface. The E2 node 1020 may transmit a message for each interface to the Near-RT RIC 1010 as it is through the 'E2 Node Component Configuration Addition List' IE of the E2 setup request message (e.g., the E2 SETUP REQUEST of the operation 1031). For example, as in Table 3, as the 'E2 Node Component Request Part' IE and the 'E2 Node Component Response Part' IE are defined, the E2 node 1020 may include both a request message and a response message (or an acknowledgment message) in the E2 setup request message. A request message to be transmitted or received from an E2 node may be included in the 'E2 Node Component Request Part' IE. A response message to be transmitted or received from an E2 node may be included in the 'E2 Node Component Response Part' IE.

For example, an O-DU may include an F1 setting request message (e.g., an F1 SETUP REQUEST of TS 38.473) in the 'E2 Node Component Request Part' IE. The O-DU may transmit the F1 setting request message to the Near-RT RIC 1010 through the 'E2 Node Component Request Part' IE. The O-DU may include an F1 setting response message (e.g., an F1 SETUP RESPONSE) in the 'E2 Node Component Response Part' IE. The O-DU may transmit the F1 setting response message to the Near-RT RIC 1010 through the 'E2 Node Component Request Part' IE.

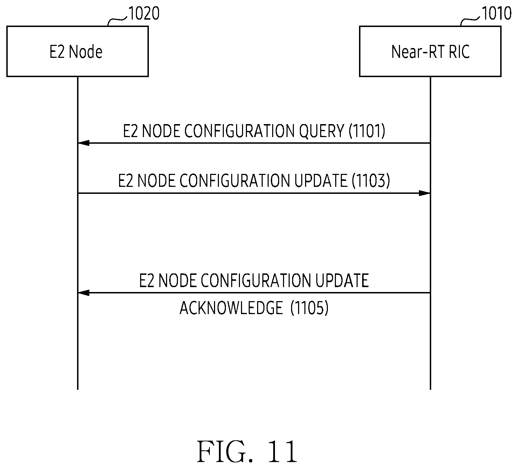

FIG. 11 illustrates an example of an E2 node configuration query procedure. The E2 node configuration query procedure may be initiated by a Near-RT RIC 1010. An RIC query procedure may be performed by the E2 node 1020 and the Near-RT RIC 1010 of FIG. 10.

Referring to FIG. 11, in an operation 1101, the Near-RT RIC 1010 may transmit an E2 node configuration query message to the E2 node 1020. The Near-RT RIC 1010 may inquire the E2 node 1020 for information on an E2 node component configuration that needs to be acknowledged. The information on the E2 node component configuration may include items corresponding to the 'E2 Node Component Configuration' IE of Table 1 to Table 3 described in FIG. 10.

An E2 node configuration update procedure may be initiated by the E2 node 1020 in a case that a change occurs in an interface-specific message (e.g., the messages in Table 3) related to parameters of an E2 node. Until the E2 node 1020 requests an E2 node configuration update, the Near-RT RIC 1010 operates based on messages (e.g., the messages in Table 3) before the update. Therefore, in order to increase efficiency of a procedure and accuracy of a decision, the Near-RT RIC 1010 may proactively inquire the E2 node 1020 for the information on the E2 node component configuration. For example, the Near-RT RIC 1010 may transmit the E2 node configuration query message to the E2 node 1020 before the E2 node configuration update procedure is initiated by the E2 node 1020. For example, the E2 node configuration query message may have the following structure.

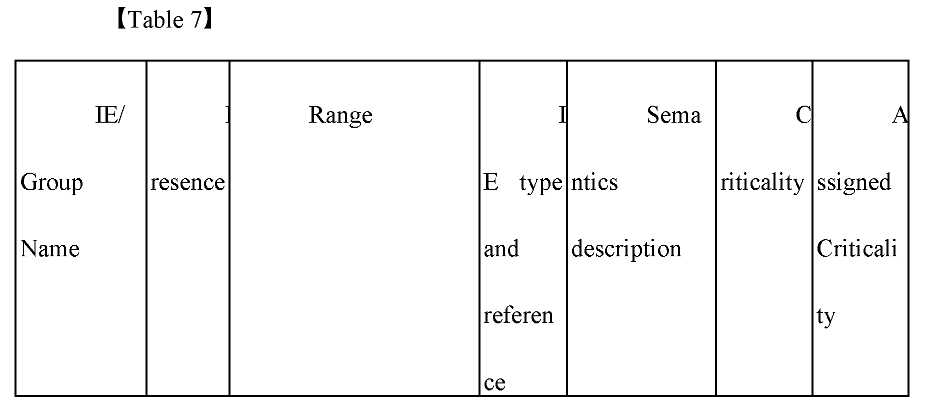

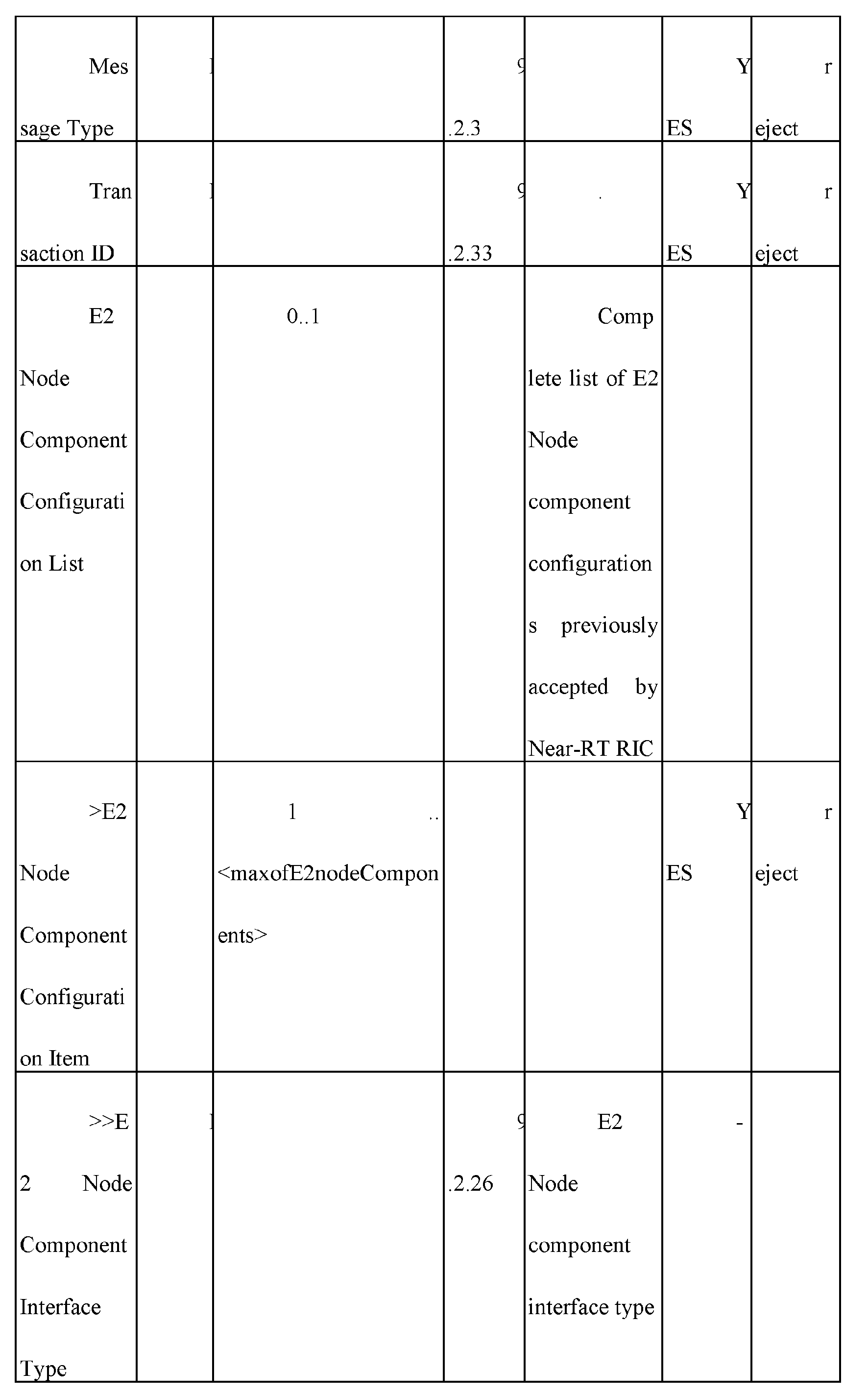

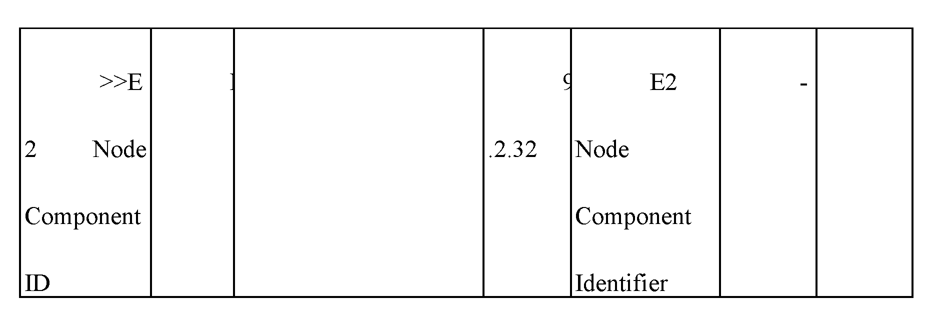

When a list (the 'E2 Node Component Configuration List' IE) is set, the E2 node configuration query message may be used to request, to an E2 node, the E2 node configuration update for an interface type (the 'E2 Node Component Interface Type' IE) and an E2 node component ID (the 'E2 Node Component ID' IE) indicated in the list.

For example, the 'E2 Node Component Interface Type' IE mentioned in Table 1 to Table 7 may be configured as in the following table.

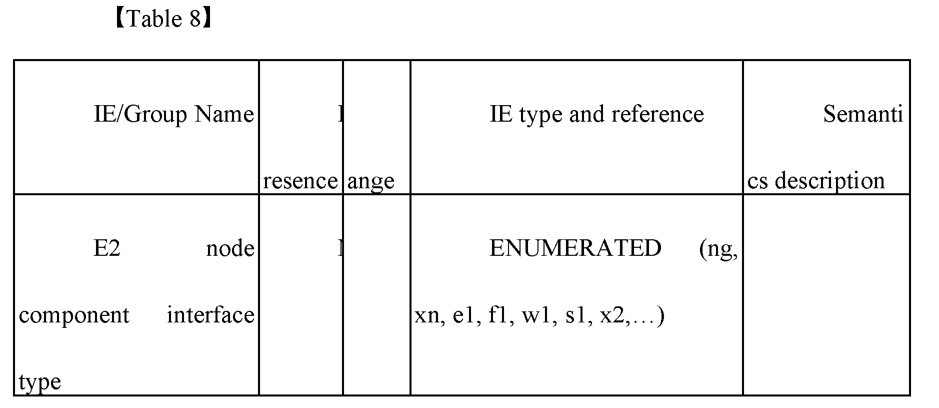

For example, the 'E2 Node Component Interface Type' IE mentioned in Table 1 to Table 7 may be configured as in the following table.

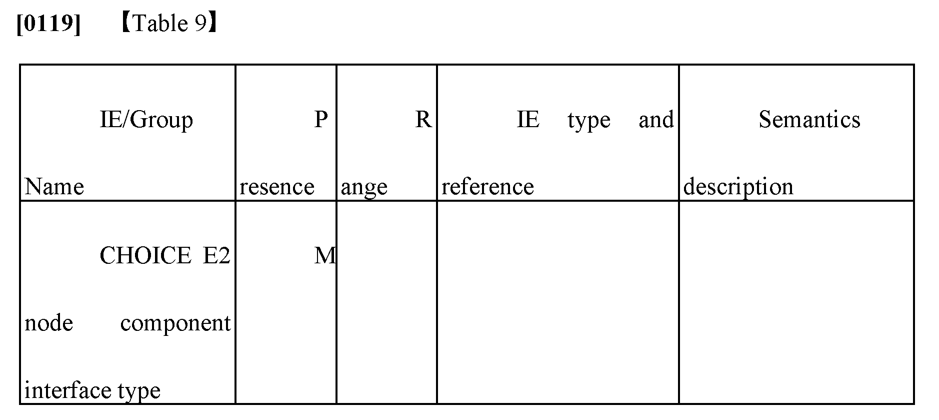

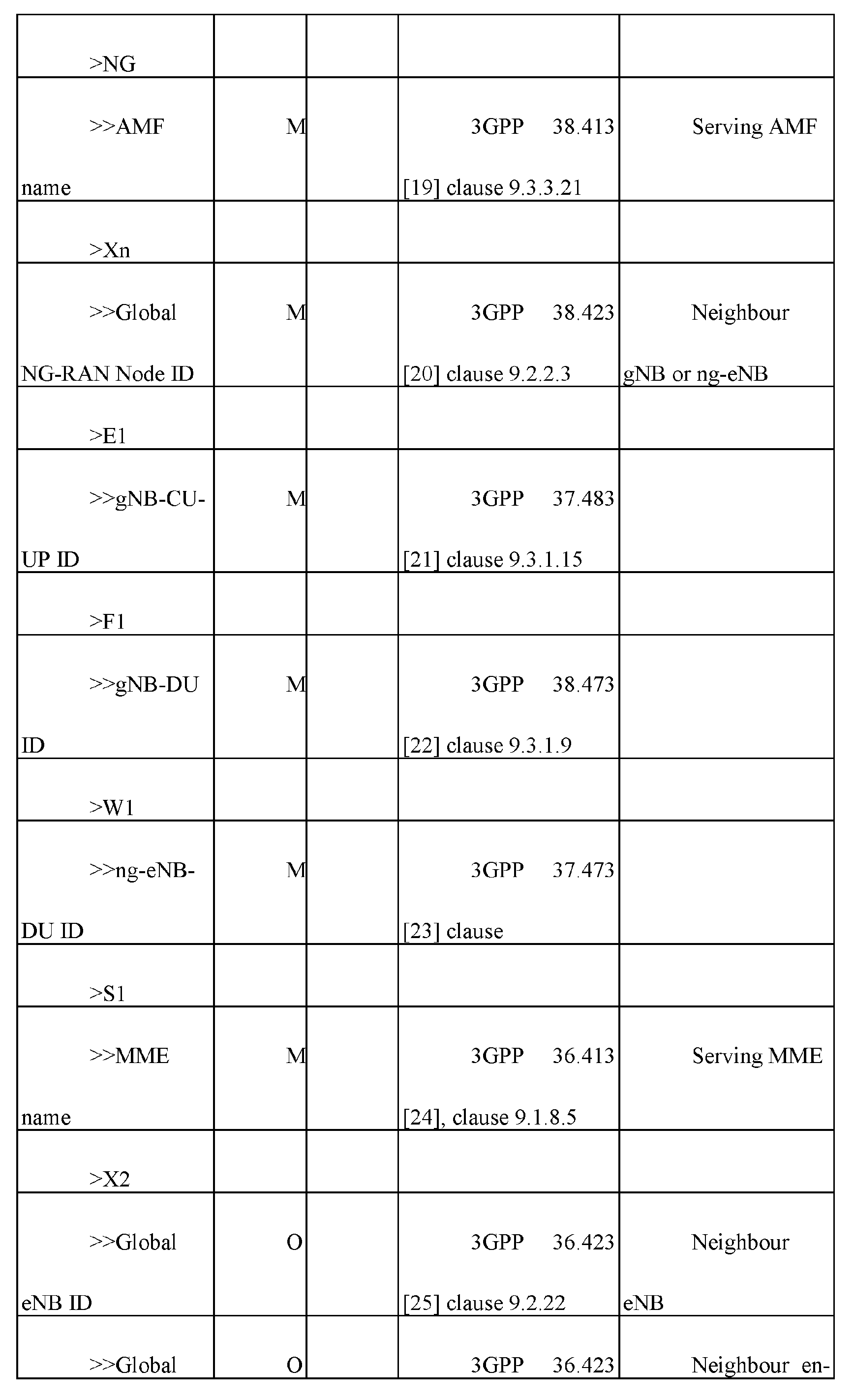

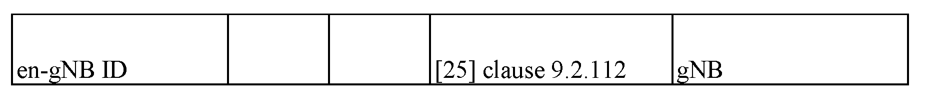

The Near-RT RIC 1010 may identify one or more E2 node components that need to be acknowledged among E2 node components previously accepted by the Near-RT RIC 1010. Information on the one or more E2 node components that need to be acknowledged may correspond to the 'E2 Node Component Configuration Item'IE. The Near-RT RIC 1010 may inquire the E2 node 1020 of all E2 node component configurations accepted by the Near-RT RIC 1010. For example, the Near-RT RIC 1010 may include the interface type (the 'E2 Node Component Interface Type' IE) and the E2 node component ID (the 'E2 Node Component ID' IE) in the E2 node configuration query message with respect to each E2 node component configuration of the accepted E2 node component configurations. Meanwhile, the Near-RT RIC 1010 may transmit an inquiry to the E2 node 1020 for all E2 node component configurations accepted by the Near-RT RIC 1010 in another method. According to an embodiment, the Near-RT RIC 1010 may transmit an E2 node configuration query message not including the 'E2 Node Component Configuration List' IE to the E2 node 1020. The E2 node configuration query message including only a message type (the 'Message Type' IE) and a transaction ID (the 'Transaction ID' IE) may be used to request all E2 node component configurations accepted by the Near-RT RIC to the E2 node.

The Near-RT RIC 1010 may request the E2 node to update an E2 node configuration with respect to all entire interface types. For example, the Near-RT RIC 1010 may inquire a CU of all E2 node component configurations related to the CU. CU may be connected to a CU-CP, a gNB-DU, a ng-eNB-DU, and an AMF, and thus may support E1, F1, W1, and Xn interfaces. The Near-RT RIC 1010 may request an update of the E2 node configuration for each of all interface types related to the E2 node. According to an embodiment, the Near-RT RIC 1010 may transmit the E2 node configuration query message including all interface types (the 'E2 Node Component Interface Type' IE) requiring a request. According to another embodiment, the Near-RT RIC 1010 may transmit an E2 node configuration query message that does not include the 'E2 Node Component Configuration List' IE to the E2 node 1020. The E2 node configuration query message including only the message type (the 'Message Type' IE) and the transaction ID (the 'Transaction ID' IE) may request the E2 NODE component update for all interface types to the E2 node.

For each E2 node component, the information may include the interface type (the 'E2 Node Component Interface Type' IE) and the E2 node component ID (the 'E2 Node Component ID' IE).

For example, the Near-RT RIC 1010 may identify one or more E2 node components that need to be acknowledged among E2 node component configurations added through the E2 setup request procedure of FIG. 10. The operation 1101 may be performed after the E2 setup request procedure. An E2 node component, an interface type corresponding to the E2 node component, and an E2 node component ID corresponding to the E2 node component may be included in the E2 setup request message of the operation 1031. The interface type corresponding to the E2 node component and the E2 node component ID corresponding to the E2 node component may be included in the E2 setup response message of the operation 1033.

For example, the Near-RT RIC 1010 may identify one or more E2 node components that need to be acknowledged among E2 node component configurations updated (e.g., added, modified, deleted) through the E2 node configuration update procedure of FIG. 10. The operation 1101 may be performed after the E2 node configuration update procedure. An E2 node component, an interface type corresponding to the E2 node component, and an E2 node component ID corresponding to the E2 node component may be included in the E2 node configuration update message of the operation 1035. The interface type corresponding to the E2 node component and the E2 node component ID corresponding to the E2 node component may be included in the E2 node configuration update acknowledgment message of the operation 1033.

In an operation 1103, the E2 node 1020 may transmit the E2 NODE CONFIGURATION UPDATE message to the Near-RT RIC 1010. The Near-RT RIC 1010 may receive the E2 node configuration update message from the E2 node 1020. The E2 node 1020 may identify the E2 node interface type and the E2 node component ID that are required to be acknowledged in the Near-RT RIC 1010, that is, included in the message of the operation 1101. The E2 node 1020 may identify information on an E2 node component configuration (hereinafter, E2 node component information) corresponding to the E2 node interface type and the E2 node component ID. The E2 node 1020 may include the E2 node component information in the E2 node configuration update message. For example, for the E2 node configuration update message, Table 5 may be referenced. The E2 node configuration update message may function as a response to an inquiry to the Near-RT RIC 1010. The E2 node configuration update message may include the information on the E2 node component configuration corresponding to the E2 node interface type and the E2 node component ID. The E2 node 1020 may provide the E2 node component information to the Near-RT RIC 1010.

In an operation 1105, the Near-RT RIC 1010 may transmit an E2 NODE CONFIGURATION ACKNOWLEDGE message to the E2 node 1020. The E2 node 1020 may receive the E2 node configuration update acknowledgment message from the Near-RT RIC 1010. The E2 node 1020 may identify that the E2 node component requested for update through the operation 1103 has been accepted by the Near-RT RIC 1010. For example, for the E2 node configuration update acknowledgment message, Table 6 may be referenced.

In FIG. 11, a situation in which the E2 node configuration update procedure is performed in order to inquire for the E2 node component configuration after the E2 node configuration query message has been described, but embodiments of the present disclosure are not limited thereto. According to an embodiment, an additional acknowledgement message (or a failure message (e.g., an E2 NODE CONFIGURATION UPDATE FAILURE message) in response to a query message after the E2 node configuration update message may not be transmitted. In addition, according to an embodiment, an E2 node configuration query response message for responding to a query message may be defined separately from the E2 node configuration update procedure.

In embodiments, a method performed by an E2 node is provided. The method may comprise receiving, from a Near-real-time (RT) radio access network (RAN) intelligent controller (RIC), an E2 node configuration query message. The method may comprise transmitting, to the Near-RT RIC, an E2 node configuration update message. The method may comprise receiving, from the Near-RT RIC, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

For example, the E2 node configuration query message may include a message type, a transaction identifier, and an E2 node component list. The E2 node component list may include information on one or more E2 node components including the E2 node component. The information may include, for each E2 node component, an interface type and a component identifier.

For example, the one or more E2 node components may have been previously accepted by the Near-RT RIC.

For example, the interface type and the component identifier corresponding to the E2 node component may be included in a previously transmitted E2 setup request message or an E2 node configuration update message before receiving the E2 node configuration query message. The interface type and the component identifier corresponding to the E2 node component may be included in an E2 setup response message corresponding to the E2 setup request message or an E2 node configuration update acknowledgment message corresponding to the E2 node configuration update message.

For example, the request part may include a next generation node base station (gNB) - central unit (CU) configuration update message or a gNB - distributed unit (DU) configuration update message in a case of the E2 node being a gNB-DU. The response part may include a gNB-CU configuration update acknowledgment message corresponding to the gNB-CU configuration update message or a gNB-DU configuration update acknowledgment message corresponding to the gNB-DU configuration update message in a case of the E2 node being a gNB-DU.

In embodiments, a method performed by a Near-real-time (RT) radio access network (RAN) intelligent controller (RIC) is provided. The method may comprise transmitting, to an E2 node, an E2 node configuration query message. The method may comprise receiving, from the E2 node, an E2 node configuration update message. The method may comprise transmitting, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

For example, the E2 node configuration query message may include a message type, a transaction identifier, and an E2 node component list. The E2 node component list may include information on one or more E2 node components including the E2 node component. The information may include, for each E2 node component, an interface type and a component identifier.

For example, the one or more E2 node components may have been previously accepted by the Near-RT RIC.

For example, the interface type and the component identifier corresponding to the E2 node component may be included in a previously received E2 setup request message or an E2 node configuration update message before transmitting the E2 node configuration query message. The interface type and the component identifier corresponding to the E2 node component may be included in an E2 setup response message corresponding to the E2 setup request message or an E2 node configuration update acknowledgment message corresponding to the E2 node configuration update message.

For example, the request part may include a next generation node base station (gNB) - central unit (CU) configuration update message or a gNB - distributed unit (DU) configuration update message in a case of the E2 node being a gNB-DU. The response part may include a gNB-CU configuration update acknowledgment message corresponding to the gNB-CU configuration update message or a gNB-DU configuration update acknowledgment message corresponding to the gNB-DU configuration update message in a case of the E2 node being a gNB-DU.

In embodiments, an apparatus of an E2 node is provided. The apparatus may comprise at least one transceiver and at least one processor coupled to the at least one transceiver. The at least one processor may be configured to receive an E2 node configuration query message from a Near-real-time (RT) radio access network (RAN) intelligent controller (RIC). The at least one processor may be configured to transmit an E2 node configuration update message to the Near-RT RIC. The at least one processor may be configured to receive an E2 node configuration update acknowledgment message from the Near-RT RIC. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

For example, the E2 node configuration query message may include a message type, a transaction identifier, and an E2 node component list. The E2 node component list may include information on one or more E2 node components including the E2 node component. The information may include, for each E2 node component, an interface type and a component identifier.

For example, the one or more E2 node components may have been previously accepted by the Near-RT RIC.

For example, the interface type and the component identifier corresponding to the E2 node component may be included in a previously transmitted E2 setup request message or an E2 node configuration update message before receiving the E2 node configuration query message. The interface type and the component identifier corresponding to the E2 node component may be included in an E2 setup response message corresponding to the E2 setup request message or an E2 node configuration update acknowledgment message corresponding to the E2 node configuration update message.

For example, the request part may include a next generation node base station (gNB) - central unit (CU) configuration update message or a gNB - distributed unit (DU) configuration update message in a case of the E2 node being a gNB-DU. The response part may include a gNB-CU configuration update acknowledgment message corresponding to the gNB-CU configuration update message or a gNB-DU configuration update acknowledgment message corresponding to the gNB-DU configuration update message in a case of the E2 node being a gNB-DU.

In embodiments, an apparatus of a Near- real-time (RT) radio access network (RAN) intelligent controller (RIC) is provide. The apparatus may comprise at least one transceiver and at least one processor coupled to the at least one transceiver. The at least one processor may be configured to transmit, to an E2 node, an E2 node configuration query message. The at least one processor may be configured to receive, from the E2 node, an E2 node configuration update message. The at least one processor may be configured to transmit, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

For example, the E2 node configuration query message may include a message type, a transaction identifier, and an E2 node component list. The E2 node component list may include information on one or more E2 node components including the E2 node component. The information may include, for each E2 node component, an interface type and a component identifier.

For example, the one or more E2 node components may have been previously accepted by the Near-RT RIC.

For example, the interface type and the component identifier corresponding to the E2 node component may be included in a previously received E2 setup request message or an E2 node configuration update message before transmitting the E2 node configuration query message. The interface type and the component identifier corresponding to the E2 node component may be included in an E2 setup response message corresponding to the E2 setup request message or an E2 node configuration update acknowledgment message corresponding to the E2 node configuration update message.

For example, the request part may include a next generation node B (gNB) - central unit (CU) configuration update message or a gNB - distributed unit (DU) configuration update message in a case of the E2 node being a gNB-DU. The response part may include a gNB-CU configuration update acknowledgment message corresponding to the gNB-CU configuration update message or a gNB-DU configuration update acknowledgment message corresponding to the gNB-DU configuration update message in a case of the E2 node being a gNB-DU.

In embodiments, an apparatus of an E2 node may comprise memory storing instructions, at least one transceiver and at least one processor coupled to the at least one transceiver. The instructions, when executed by the at least one processor, may be configured to cause the apparatus to receive an E2 node configuration query message from a Near- real-time (RT) radio access network (RAN) intelligent controller (RIC), transmit an E2 node configuration update message to the Near-RT RIC, and receive an E2 node configuration update acknowledgment message from the Near-RT RIC. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, an apparatus of a Near- real-time (RT) radio access network (RAN) intelligent controller (RIC) may comprise memory storing instructions, at least one transceiver and at least one processor coupled to the at least one transceiver. The instructions, when executed by the at least one processor, may be configured to cause the apparatus to transmit, to an E2 node, an E2 node configuration query message, receive, from the E2 node, an E2 node configuration update message, and transmit, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, a non-transitory computer-readable storage medium is provided. The non-transitory computer-readable storage medium may store instructions that cause the apparatus to perform operations including receiving, from a Near- real-time (RT) radio access network (RAN) intelligent controller (RIC), an E2 node configuration query message, transmitting, to the Near-RT RIC, an E2 node configuration update message, and receiving, from the Near-RT RIC, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

In embodiments, a non-transitory computer-readable storage medium is provided. The non-transitory computer-readable storage medium may store instructions that cause the apparatus to perform operations including transmitting, to an E2 node, an E2 node configuration query message, receiving, from the E2 node, an E2 node configuration update message, and transmitting, to the E2 node, an E2 node configuration update acknowledgment message. The E2 node configuration query message may include an interface type and a component identifier corresponding to an E2 node component. The E2 node configuration update message may include the interface type, the component identifier, and E2 node component information corresponding to the E2 node component. The E2 node component information may include a request part of E2 node component configuration information and a response part of the E2 node component configuration information.

Methods according to embodiments described in claims or specifications of the present disclosure may be implemented as a form of hardware, software, or a combination of hardware and software.

In a case of implementing as software, a computer-readable storage medium for storing one or more programs (software module) may be provided. The one or more programs stored in the computer-readable storage medium are configured for execution by one or more processors in an electronic device. The one or more programs include instructions that cause the electronic device to execute the methods according to embodiments described in claims or specifications of the present disclosure.

Such a program (software module, software) may be stored in a random access memory, a non-volatile memory including a flash memory, a read only memory (ROM), an electrically erasable programmable read only memory (EEPROM), a magnetic disc storage device, a compact disc-ROM (CD-ROM), an optical storage device (digital versatile discs (DVDs) or other formats), or a magnetic cassette. Alternatively, it may be stored in memory configured with a combination of some or all of them. In addition, a plurality of configuration memories may be included.

Additionally, a program may be stored in an attachable storage device that may be accessed through a communication network such as the Internet, Intranet, local area network (LAN), wide area network (WAN), or storage area network (SAN), or a combination thereof. Such a storage device may be connected to a device performing an embodiment of the present disclosure through an external port. In addition, a separate storage device on the communication network may also be connected to a device performing an embodiment of the present disclosure.

In the above-described specific embodiments of the present disclosure, components included in the disclosure are expressed in the singular or plural according to the presented specific embodiment. However, the singular or plural expression is selected appropriately according to a situation presented for convenience of explanation, and the present disclosure is not limited to the singular or plural component, and even components expressed in the plural may be configured in the singular, or a component expressed in the singular may be configured in the plural.

Meanwhile, specific embodiments have been described in the detailed description of the present disclosure, and of course, various modifications are possible without departing from the scope of the present disclosure.

## Claims

1. A method performed by an E2 node, the method comprising:
receiving, from a Near-real-time (RT) radio access network (RAN) intelligent controller (RIC), an E2 node configuration query message;
transmitting, to the Near-RT RIC, an E2 node configuration update message; and
receiving, from the Near-RT RIC, an E2 node configuration update acknowledgment message,
wherein the E2 node configuration query message includes an interface type and a component identifier corresponding to an E2 node component,
wherein the E2 node configuration update message includes the interface type, the component identifier, and E2 node component information corresponding to the E2 node component, and
wherein the E2 node component information includes a request part of E2 node component configuration information and a response part of the E2 node component configuration information.

2. The method of claim 1,
wherein the E2 node configuration query message includes a message type, a transaction identifier, and an E2 node component list,
wherein the E2 node component list includes information on one or more E2 node components including the E2 node component, and
wherein the information includes, for each E2 node component, an interface type and a component identifier.

3. The method of claim 2,
wherein the one or more E2 node components have been previously accepted by the Near-RT RIC.

4. The method of claim 1,
wherein the interface type and the component identifier corresponding to the E2 node component are included in a previously transmitted E2 setup request message or an E2 node configuration update message before receiving the E2 node configuration query message, and
wherein the interface type and the component identifier corresponding to the E2 node component are included in an E2 setup response message corresponding to the E2 setup request message or an E2 node configuration update acknowledgment message corresponding to the E2 node configuration update message.

5. The method of claim 1,
wherein the request part includes a next generation node base station (gNB) - central unit (CU) configuration update message or a gNB - distributed unit (DU) configuration update message in a case of the E2 node being a gNB-DU, and
wherein the response part includes a gNB-CU configuration update acknowledgment message corresponding to the gNB-CU configuration update message or a gNB-DU configuration update acknowledgment message corresponding to the gNB-DU configuration update message in a case of the E2 node being a gNB-DU.

6. A method performed by a Near-real-time (RT) radio access network (RAN) intelligent controller (RIC), the method comprising:
transmitting, to an E2 node, an E2 node configuration query message;
receiving, from the E2 node, an E2 node configuration update message; and
transmitting, to the E2 node, an E2 node configuration update acknowledgment message,
wherein the E2 node configuration query message includes an interface type and a component identifier corresponding to an E2 node component,
wherein the E2 node configuration update message includes the interface type, the component identifier, and E2 node component information corresponding to the E2 node component, and
wherein the E2 node component information includes a request part of E2 node component configuration information and a response part of the E2 node component configuration information.

7. The method of claim 6,
wherein the E2 node configuration query message includes a message type, a transaction identifier, and an E2 node component list,
wherein the E2 node component list includes information on one or more E2 node components including the E2 node component, and
wherein the information includes, for each E2 node component, an interface type and a component identifier.

8. The method of claim 7,
wherein the one or more E2 node components have been previously accepted by the Near-RT RIC.

9. The method of claim 6,
wherein the interface type and the component identifier corresponding to the E2 node component are included in a previously received E2 setup request message or an E2 node configuration update message before transmitting the E2 node configuration query message, and
wherein the interface type and the component identifier corresponding to the E2 node component are included in an E2 setup response message corresponding to the E2 setup request message or an E2 node configuration update acknowledgment message corresponding to the E2 node configuration update message.

10. The method of claim 6,
wherein the request part includes a next generation node base station (gNB) - central unit (CU) configuration update message or a gNB - distributed unit (DU) configuration update message in a case of the E2 node being a gNB-DU, and
wherein the response part includes a gNB-CU configuration update acknowledgment message corresponding to the gNB-CU configuration update message or a gNB-DU configuration update acknowledgment message corresponding to the gNB-DU configuration update message in a case of the E2 node being a gNB-DU.

11. An apparatus of an E2 node, the apparatus comprising:
at least one transceiver; and
at least one processor coupled to the at least one transceiver,
wherein the at least one processor is configured to:
receive an E2 node configuration query message from a Near-real-time (RT) radio access network (RAN) intelligent controller (RIC);
transmit an E2 node configuration update message to the Near-RT RIC; and
receive an E2 node configuration update acknowledgment message from the Near-RT RIC,
wherein the E2 node configuration query message includes an interface type and a component identifier corresponding to an E2 node component,
wherein the E2 node configuration update message includes the interface type, the component identifier, and E2 node component information corresponding to the E2 node component, and
wherein the E2 node component information includes a request part of E2 node component configuration information and a response part of the E2 node component configuration information.

12. The apparatus of claim 11,
wherein the E2 node configuration query message includes a message type, a transaction identifier, and an E2 node component list,
wherein the E2 node component list includes information on one or more E2 node components including the E2 node component, and
wherein the information includes, for each E2 node component, an interface type and a component identifier.

13. The apparatus of claim 12,
wherein the one or more E2 node components have been previously accepted by the Near-RT RIC.

14. The apparatus of claim 11,
wherein the interface type and the component identifier corresponding to the E2 node component are included in a previously transmitted E2 setup request message or an E2 node configuration update message before receiving the E2 node configuration query message, and
wherein the interface type and the component identifier corresponding to the E2 node component are included in an E2 setup response message corresponding to the E2 setup request message or an E2 node configuration update acknowledgment message corresponding to the E2 node configuration update message.

15. The apparatus of claim 11,
wherein the request part includes a next generation node base station (gNB) - central unit (CU) configuration update message or a gNB - distributed unit (DU) configuration update message in case of the E2 node being a gNB-DU, and
wherein the response part includes a gNB-CU configuration update acknowledgment message corresponding to the gNB-CU configuration update message or a gNB-DU configuration update acknowledgment message corresponding to the gNB-DU configuration update message in case of the E2 node being a gNB-DU.
